(19) Europäisches Patentamt
European Patent Office
Office européen des brevets

(11) **EP 3 901 620 A1**

(12) **EUROPEAN PATENT APPLICATION**
published in accordance with Art. 153(4) EPC

(43) Date of publication:
**27.10.2021 Bulletin 2021/43**

(21) Application number: **19901077.8**

(22) Date of filing: **18.11.2019**

(51) Int Cl.:
**G01N 21/78** (2006.01)

(86) International application number:
**PCT/JP2019/045035**

(87) International publication number:
**WO 2020/129509 (25.06.2020 Gazette 2020/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2018 JP 2018239395**

(71) Applicant: **FUJIFILM Corporation
Tokyo 106-8620 (JP)**

(72) Inventors:
• **YAMAMOTO Yusuke**
  **Ashigarakami-gun, Kanagawa 258-8577 (JP)**
• **FUJITA Masaharu**
  **Ashigarakami-gun, Kanagawa 258-8577 (JP)**
• **KASAHARA Toshihiko**
  **Ashigarakami-gun, Kanagawa 258-8577 (JP)**

(74) Representative: **HGF
1 City Walk
Leeds LS11 9DX (GB)**

(54) **PHOTOTOXICITY OR PHOTOALLERGY MEASUREMENT METHOD AND REAGENT FOR USE IN SAID MEASUREMENT METHOD**

(57) Provided are a method for measuring the phototoxicity or photoallergy of a test substance without using animals and a reagent for use therein. The method for measuring phototoxicity or photoallergy includes reacting a test substance with an organic compound that is an N-(arylalkylcarbonyl)cysteine or an $\alpha$-N-(arylalkylcarbonyl)lysine under irradiation with ultraviolet light; reacting the test substance with the organic compound without irradiation with ultraviolet light; determining the depletion of the organic compound after each reaction by an optical measurement; and detecting phototoxicity or photoallergy from the difference between the depletion of the organic compound after the reaction under irradiation with ultraviolet light and the depletion of the organic compound after the reaction without irradiation with ultraviolet light.

EP 3 901 620 A1

**Description**

**BACKGROUND OF THE INVENTION**

1. Field of the Invention

The present invention relates to methods for measuring the phototoxicity or photoallergy of test substances and reagents for use in methods for measuring the phototoxicity or photoallergy of test substances.

2. Description of the Related Art

Phototoxicity and photoallergy refer to symptoms such as redness, swelling, and pigmentation in skin that are caused by substances activated under light irradiation. In particular, photoallergy may involve not only local symptoms in areas exposed to substances, but also severe, life-threatening systemic allergic reactions known as anaphylaxis. In addition, phototoxicity and photoallergy are thought to be one of the important toxicities because, for example, once they develop, care needs to be taken to avoid exposure over a long period of time. Thus, it is important that chemical substances present in products (e.g., medicines, agricultural chemicals, and cosmetics) that can potentially be placed in light, such as sunlight, in an exposed state be substances that do not cause allergic reactions.

In the field of medicines, the International Council for Harmonisation of Technical Requirements for Pharmaceuticals for Human Use (ICH) among the U.S., EU, and Japan has defined the need for evaluation of phototoxicity and photoallergy of novel pharmaceutically active ingredients, novel additives, clinical formulations for dermal administration, and formulations for photodynamic therapy. However, there is no established test method for in vivo animal tests. In addition, there are only two known non-animal test methods, namely, the ROS assay and 3T3 NRU PT, both of which are methods for phototoxicity evaluation. Thus, no particular test to be carried out has been defined for phototoxicity and photoallergy evaluation, and the selection of the test method is left to drug developers.

As mentioned above, the ROS assay, which is described in the ICH guideline, is known as an in chemico test for phototoxicity. This test method involves detection of reactive oxygen species generated by light irradiation, which is one of the causes of phototoxicity. Specifically, the generation of singlet oxygen and superoxide, which are reactive oxygen species, is detected from changes due to light irradiation in the absorbance of a reaction solution to which p-nitrosodimethylaniline (RNO) and imidazole are added and the absorbance of a reaction solution to which nitroblue tetrazolium chloride (NBT) is added (Onoue S, Tsuda Y (2006), Analytical studies on the prediction of photosensitive/phototoxic potential of pharmaceutical substances, Pharmaceutical Research, 23(1): 156-164, and Onoue S, Igarashi N, Yamada S, Tsuda Y (2008), High-throughput reactive oxygen species (ROS) assay: an enabling technology for screening the phototoxic potential of pharmaceutical substances, Journal of Pharmaceutical and Biomedical Analysis, 46(1): 187-193).

As an in chemico test for photoallergy, the application of the direct peptide reactivity assay (DPRA), which is a skin sensitization test, namely, photo-mDPRA, has been reported (de Avila RI, Teixeira GC, Veloso DFMC, Moreira LC, Lima EM, Valadares MC (2017), In vitro assessment of skin sensitization, photosensitization and phototoxicity potential of commercial glyphosate-containing formulations, Toxicology In Vitro, 45(3):386-392). This report indicates that the reaction of a test substance with a nucleophilic reagent in DPRA results in a higher reactivity of the test substance with the nucleophilic reagent in the reaction solution to which the photoallergic substance is added under light irradiation than without light irradiation. However, the prediction accuracy for humans and the criteria for determination of photoallergy have yet to be defined because of the insufficient amount of data being studied.

On the other hand, there are known in vitro tests using cultured cells for skin sensitization tests, such as the ARE-Nrf2 luciferase KeratinoSens™ test method (KeratinoSens is a registered trademark), LuSens (ARE-NrF2 lusiferase LuSens test method), h-CLAT (human cell line activation test), U-SENS (myeloid U937 skin sensitization test), and the IL-8 Luc assay. Furthermore, as in chemico tests for skin sensitization tests, JP2011-59102A and JP2014-37995A describe reagents and methods for measuring skin sensitization using as nucleophilic reagents a cysteine derivative having an aryl ring introduced therein and a lysine derivative having an aryl ring introduced therein. The methods described therein focus on the binding of sensitizers to biological proteins, which occurs at the early stage of skin sensitization, and use cysteine and lysine derivatives instead of proteins for prediction of skin sensitization based on their reactivity with the test substance.

**SUMMARY OF THE INVENTION**

Because the ROS assay is a test method for phototoxicity, it cannot be used to evaluate photoallergy. On the other hand, because there is no report on phototoxicity evaluation using photo-mDPRA, it is unclear whether it can be used to evaluate phototoxicity, and no clear criteria for determination of photoallergy have been defined.

As discussed above, although phototoxicity and photoallergy tests are safety tests necessary for the development of products such as medicines, agricultural chemicals, and cosmetics, there are few established test methods. In particular, there is no established test method for photoallergy in both animal tests and non-animal tests.

An object of the present invention is to provide a method for measuring the phototoxicity or photoallergy of a test substance by which the phototoxicity or photoallergy of the test substance can be evaluated without using animals and a reagent for use therein.

To solve the foregoing problem, the inventors have conducted intensive research in which the inventors have reacted a test substance with an N-(arylalkylcarbonyl)cysteine or an $\alpha$-N-(arylalkylcarbonyl)lysine under irradiation with ultraviolet light and without irradiation with ultraviolet light and have determined the depletion of the organic compound after each reaction by an optical measurement. As a result, the inventors have found that the phototoxicity or photoallergy of the test substance can be measured from the difference between the depletion of the organic compound after the reaction under irradiation with ultraviolet light and the depletion of the organic compound after the reaction without irradiation with ultraviolet light. The present invention has been made based on these findings.

Specifically, according to the present invention, the following invention is provided:

<1> A method for measuring phototoxicity or photoallergy, including reacting a test substance with an organic compound that is an N-(arylalkylcarbonyl)cysteine or an $\alpha$-N-(arylalkylcarbonyl)lysine under irradiation with ultraviolet light; reacting the test substance with the organic compound that is the N-(arylalkylcarbonyl)cysteine or the $\alpha$-N-(arylalkylcarbonyl)lysine without irradiation with ultraviolet light; determining the depletion of the organic compound after each reaction by an optical measurement; and detecting phototoxicity or photoallergy from the difference between the depletion of the organic compound after the reaction under irradiation with ultraviolet light and the depletion of the organic compound after the reaction without irradiation with ultraviolet light.

<2> The method for measuring phototoxicity or photoallergy according to <1>, wherein the organic compound is N-(2-phenylacetyl)cysteine or N-[2-(naphthalen-1-yl)acetyl]cysteine.

<3> The method for measuring phototoxicity or photoallergy according to <1>, wherein the organic compound is $\alpha$-N-(2-phenylacetyl)lysine or $\alpha$-N-[2-(naphthalen-1-yl)acetyl]lysine.

<4> The method for measuring phototoxicity or photoallergy according to any one of <1> to <3>, wherein the ultraviolet light used for the reaction under irradiation with ultraviolet light is ultraviolet light with a wavelength of 400 nm or less.

<5> The method for measuring phototoxicity or photoallergy according to any one of <1> to <4>, wherein the depletion of the organic compound after each reaction is determined by an optical measurement using a fluorescence detector.

<6> The method for measuring phototoxicity or photoallergy according to <5>, wherein the optical measurement using a fluorescence detector is performed at an excitation wavelength of 200 to 350 nm and a fluorescence wavelength of 200 to 400 nm.

<7> The method for measuring phototoxicity or photoallergy according to any one of <1> to <4>, wherein the depletion of the organic compound after each reaction is determined by an optical measurement using an ultraviolet detector.

<8> The method for measuring phototoxicity or photoallergy according to <7>, wherein the optical measurement using an ultraviolet detector is performed at a detection wavelength of 200 to 400 nm.

<9> The method for measuring phototoxicity or photoallergy according to any one of <1> to <8>, wherein the concentration of the organic compound in a reaction solution for the reaction of the test substance with the organic compound is 0.05 $\mu$mol/L to 400 $\mu$mol/L.

<10> The method for measuring phototoxicity or photoallergy according to any one of <1> to <9>, wherein, when the test substance is reacted with the organic compound, a mixture containing two or more test substances is reacted with the organic compound.

<11> The method for measuring phototoxicity or photoallergy according to any one of <1> to <10>, further including subjecting to chromatography a reaction product obtained by reacting the test substance with the organic compound.

<12> The method for measuring phototoxicity or photoallergy according to any one of <1> to <11>, wherein, in the detecting phototoxicity or photoallergy from the difference between the depletion of the organic compound after the reaction under irradiation with ultraviolet light and the depletion of the organic compound after the reaction without irradiation with ultraviolet light, the test substance is determined to be positive in a case where one or more of the following criteria are satisfied:

(1) the difference obtained by subtracting the depletion of the N-(arylalkylcarbonyl)cysteine after the reaction without irradiation with ultraviolet light from the depletion of the N-(arylalkylcarbonyl)cysteine after the reaction under irradiation with ultraviolet light is 15% or more;
(2) the difference obtained by subtracting the depletion of the $\alpha$-N-(arylalkylcarbonyl)lysine after the reaction without irradiation with ultraviolet light from the depletion of the $\alpha$-N-(arylalkylcarbonyl)lysine after the reaction under irradiation with ultraviolet light is 15% or more; and

(3) the average of the difference in depletion in (1) and the difference in depletion in (2) is 10% or more.

<13> A reagent for use in the method for measuring phototoxicity or photoallergy according to any one of <1> to <12>, the reagent including an N-(arylalkylcarbonyl)cysteine or an $\alpha$-N-(arylalkylcarbonyl)lysine.

According to the present invention, the phototoxicity or photoallergy of a test substance can be measured without using animals.

**DESCRIPTION OF THE PREFERRED EMBODIMENTS**

As used herein, a numerical range represented by "to" is meant to include values recited before and after "to" as lower and upper limits.

The present invention relates to a method for measuring phototoxicity or photoallergy, including reacting a test substance with an organic compound that is an N-(arylalkylcarbonyl)cysteine or an $\alpha$-N-(arylalkylcarbonyl)lysine under irradiation with ultraviolet light; reacting the test substance with the organic compound that is the N-(arylalkylcarbonyl)cysteine or the $\alpha$-N-(arylalkylcarbonyl)lysine without irradiation with ultraviolet light; determining the depletion of the organic compound after each reaction by an optical measurement; and detecting phototoxicity or photoallergy from the difference between the depletion of the organic compound after the reaction under irradiation with ultraviolet light and the depletion of the organic compound after the reaction without irradiation with ultraviolet light.

The present invention also relates to a reagent for use in the method for measuring phototoxicity or photoallergy according to the present invention, the reagent including an N-(arylalkylcarbonyl)cysteine or an $\alpha$-N-(arylalkylcarbonyl)lysine as a main measuring agent.

The present invention has the advantage that an N-(arylalkylcarbonyl)cysteine or an $\alpha$-N-(arylalkylcarbonyl)lysine can be used as a reagent to measure phototoxicity or photoallergy without using animals. In addition, the organic compound in the present invention can be detected by fluorescence detection, which can be used to quantify the organic compound completely separately from the test substance.

In the present invention, "measuring phototoxicity or photoallergy" is meant to include the validation of phototoxicity or photoallergy measurements and is also meant to include the determination of the presence or absence of phototoxicity or photoallergy based on certain criteria and quantitative measurements of phototoxicity or photoallergy.

The irradiation of chemical substances in the ground state with light generates reactive oxygen species and excited (activated) chemical substances. Cytotoxicity induced by these reactive oxygen species or excited (activated) chemical substances is referred to as phototoxicity. The excited (activated) chemical substances generated as described above may also bind to proteins to form complexes. Allergic symptoms induced when these complexes are recognized and memorized by the biological immune system are referred to as photoallergy.

The present invention provides a test method using an N-(arylalkylcarbonyl)cysteine or an $\alpha$-N-(arylalkylcarbonyl)lysine. This test method includes reacting a test substance with one of these two reagents under irradiation with ultraviolet light and without irradiation with ultraviolet light, determining the depletion of the organic compound after each reaction by an optical measurement, and then predicting phototoxicity or photoallergy from the difference between the depletion of the organic compound after the reaction under irradiation with ultraviolet light and the depletion of the organic compound after the reaction without irradiation with ultraviolet light.

In the present invention, as the conditions for the reaction of the test substance with the organic compound and the conditions for each optical measurement method, it is preferred to use the same conditions for the reaction under irradiation with ultraviolet light and the reaction without irradiation with ultraviolet light, and it is particularly preferred to use completely the same conditions.

In the present invention, "reacting the test substance with the organic compound under irradiation with ultraviolet light" includes not only mixing and reacting the test substance with the organic compound under irradiation with ultraviolet light, but also thoroughly mixing the test substance with the organic compound and then placing the mixture under irradiation with ultraviolet light for a predetermined period of time.

In the present invention, an N-(arylalkylcarbonyl)cysteine or an $\alpha$-N-(arylalkylcarbonyl)lysine is used.

The N-(arylalkylcarbonyl)cysteine or the $\alpha$-N-(arylalkylcarbonyl)lysine is preferably an organic compound that emits fluorescence at 200 to 400 nm and that has a molar absorption coefficient of 10 L/mol·cm to 500,000 L/mol·cm at the maximal absorption wavelength.

The N-(arylalkylcarbonyl)cysteine is preferably a compound that exhibits absorption in the wavelength range of 190 to 2,500 nm, more preferably 200 to 700 nm, either as-is or in solution form. Further preferred is a compound that has maximal absorption in the above wavelength range. The N-(arylalkylcarbonyl)cysteine is also preferably a compound that has absorption with a molar absorption coefficient (L/mol·cm) of 10 or more at the maximal absorption, more preferably a compound that has absorption with a molar absorption coefficient of 100 or more at the maximal absorption. Particularly preferred is a compound that has maximal absorption in the wavelength range of 200 to 700 nm and that has absorption with a molar absorption coefficient of 100 or more at the maximal absorption.

The aryl group of the N-(arylalkylcarbonyl)cysteine may have about 6 to 16 carbon atoms. The alkylcarbonyl group may have about 2 to 11 carbon atoms. The alkyl group attached to the carbonyl group may be linear, branched, or cyclic. Examples of alkyl groups include methyl, ethyl, propyl, isopropyl, butyl, isobutyl, sec-butyl, tert-butyl, pentyl, isopentyl, neopentyl, tert-pentyl, hexyl, heptyl, octyl, nonyl, decyl, 2-ethylhexyl, and cyclopropyl groups. Specific examples of such organic compounds include N-(2-phenylacetyl)cysteine and N-[2-(naphthalen-1-yl)acetyl]cysteine.

The N-(arylalkylcarbonyl)cysteine can be manufactured by a known method. For example, N-(2-phenylacetyl)cysteine can be synthesized by the method described in paragraphs 0015 to 0017 of JP2011-59102A.

N-[2-(naphthalen-1-yl)acetyl]cysteine can be synthesized by the following method.

In 270 mL of toluene, 50 g of 1-naphtylacetic acid is dissolved. While N,N-dimethylformamide (DMF) is added dropwise, 95.8 g of thionyl chloride is added dropwise at 20°C. The reaction mixture is reacted at 60°C for 2 hours, followed by cooling. After 200 mL of toluene is added, the reaction mixture is dried under reduced pressure to obtain 1-naphtylacetyl chloride (56 g).

In an aqueous solution of 14 g of sodium hydroxide in 350 mL of water, 20 g of L-cystine is added and dissolved. The solution is cooled in an ice water bath, and 8.76 g of 1-naphtylacetyl chloride is added dropwise. The reaction mixture is stirred at 20°C for 2 hours. After cooling, 16.7 mL of concentrated hydrochloric acid is added. About 700 mL of ethyl acetate is added, and crystals are filtered out and dried under reduced pressure to obtain N,N'-bis(1-naphtylacetyl)cystine (39.2 g).

To a mixture of 20 g of N,N'-bis(1-naphtylacetyl)cystine, 20 g of zinc powder, and 500 mL of methanol, 120 mL of trifluoroacetic acid is added dropwise under nitrogen purging over 2 hours. After the reaction mixture is stirred for 2 hours, an organic phase is extracted with 500 mL of ethyl acetate and is dried over magnesium sulfate, followed by filtration and concentration. The resulting residue is recrystallized from ethyl acetate and is dried to obtain N-[2-(naphthalen-1-yl)acetyl]cysteine (5.2 g).

N-[2-(Naphthalen-1-yl)acetyl]cysteine emits fluorescence at 200 to 400 nm, exhibits maximal absorption at 281 nm, and has a molar absorption coefficient of about 7,000 (L/mol·cm) and a maximal fluorescence wavelength of 335 nm.

The $\alpha$-N-(arylalkylcarbonyl)lysine, having an amino group, is reactive with a substance having low reactivity with the N-(arylalkylcarbonyl)cysteine, can be measured with a general-purpose simple analyzer, and has sufficient degrees of solubility and stability in a reaction solution containing a high proportion of organic solvent for dissolution of hydrophobic chemical substances.

The $\alpha$-N-(arylalkylcarbonyl)lysine is preferably a compound that exhibits absorption in the wavelength range of 190 to 2,500 nm, more preferably 200 to 700 nm, either as-is or in solution form. Further preferred is a compound that has maximal absorption in the above wavelength range. The $\alpha$-N-(arylalkylcarbonyl)lysine is preferably a compound having a molar absorption coefficient (L/mol·cm) of 10 to 500,000 at the maximal absorption wavelength, more preferably a compound having a molar absorption coefficient (L/mol·cm) of 10 to 2,000 at the maximal absorption wavelength, even more preferably a compound having a molar absorption coefficient of 100 to 2,000 at the maximal absorption wavelength. Particularly preferred is a compound that has maximal absorption in the wavelength range of 200 to 700 nm and that has a molar absorption coefficient of 100 to 2,000 at the maximal absorption wavelength.

The molar absorption coefficient ($\varepsilon$) is given by the following equation:

$$\varepsilon = D/(c \cdot d)$$

where D represents the absorbance of the solution, c represents the molar concentration (mol/L) of the solute, and d represents the thickness (cm) of the solution layer (optical path length). The molar absorption coefficient can be determined by measuring an absorption spectrum or absorbance using a commercially available spectrophotometer.

The aryl group of the $\alpha$-N-(arylalkylcarbonyl)lysine may have about 6 to 16 carbon atoms. Examples of aryl groups include benzene and naphthalene rings. The alkylcarbonyl group may have about 2 to 11 carbon atoms. The alkyl group attached to the carbonyl group may be linear, branched, or cyclic. Examples of alkyl groups include methyl, ethyl, propyl, isopropyl, butyl, isobutyl, sec-butyl, tert-butyl, pentyl, isopentyl, neopentyl, tert-pentyl, hexyl, heptyl, octyl, nonyl, decyl, 2-ethylhexyl, and cyclopropyl groups. Specific examples of $\alpha$-N-(arylalkylcarbonyl)lysines include $\alpha$-N-(2-phenylacetyl)lysine (hereinafter also referred to as PAL) and $\alpha$-N-[2-(naphthalen-1-yl)acetyl]lysine (hereinafter also referred to as NAL).

The $\alpha$-N-(arylalkylcarbonyl)lysine can be manufactured in accordance with a known method. For example, PAL and NAL can be synthesized by the method described in paragraphs 0025 to 0031 of JP2014-37995A.

$\alpha$-N-(2-Phenylacetyl)lysine emits fluorescence at 200 to 400 nm and has a molar absorption coefficient of about 200 L/mol·cm at the maximal absorption wavelength (around 255 nm).

$\alpha$-N-[2-(Naphthalen-1-yl)acetyl]lysine emits fluorescence at 200 to 400 nm and has a molar absorption coefficient of about 400 L/mol·cm at the maximal absorption wavelength (around 280 nm) and a maximal fluorescence wavelength of 332 nm.

The phototoxicity or photoallergy measuring reagent according to the present invention may be composed only of the N-(arylalkylcarbonyl)cysteine or the α-N-(arylalkylcarbonyl)lysine or may contain one or more additives in addition to the organic compound serving as the main measuring agent. "Main measuring agent" refers to a main ingredient of the reagent. The concentration of the main measuring agent is not particularly limited and may be any concentration at which the main measuring agent functions effectively in the measuring reagent. For example, the concentration of the main measuring agent is preferably within the range described below. Examples of additives include pH adjusters, stabilizers, chelating agents, and reducing agents. The phototoxicity or photoallergy measuring reagent according to the present invention may be a solution of the main measuring agent described above and optionally the additives described above in a solvent such as water, an aqueous buffer, an organic solvent, or a mixture thereof. The phototoxicity or photoallergy measuring reagent according to the present invention may be supplied in solution form, in liquid form, or in solid form (e.g., in powder, granular, freeze-dried, or tablet form).

For example, the phototoxicity or photoallergy measuring reagent according to the present invention may be used in the form of a solution in water, an aqueous buffer containing an organic acid salt such as ammonium acetate or an inorganic acid salt such as a phosphate, or a mixture thereof with an organic solvent such that the concentration of the organic compound is, for example, about 0.01 μmol/L to about 1 mol/L, typically about 0.1 mmol/L to about 500 mmol/L.

In the present invention, when the test substance is reacted with the organic compound, a single test substance may be reacted with the organic compound, or a mixture containing two or more test substances may be reacted with the organic compound. "Mixture containing two or more test substances" refers to a mixture containing two or more test substances as components corresponding to main components and does not refer to a mixture containing one test substance and many impurities.

A specific example of a single test substance or a mixture may be, but is not limited to, at least one of a fragrance, an essential oil, a polymer compound, a medicine, an agricultural chemical, food, a chemical product, or a plant extract composed of naturally occurring components.

For example, if the molar concentration of the test substance can be adjusted, the test substance may be dissolved in water, an organic solvent miscible with water (e.g., methanol, ethanol, acetonitrile, acetone, or N,N-dimethyl sulfoxide (DMSO)), or a mixture thereof (a mixture of water with an organic solvent, or a mixture of two or more organic solvents) such that the concentration of the test substance is, for example, about 0.01 μmol/L to about 1 mol/L, typically about 0.1 mmol/L to about 500 mmol/L, or about 1 mmol/L to about 500 mmol/L.

The test substance solution may then be mixed and reacted with the organic compound serving as the main measuring agent for the phototoxicity or photoallergy measuring reagent according to the present invention such that the molar concentration ratio of the organic compound to the test substance is, for example, 1:100 to 20:1, or 1:100 to 10:1.

For example, if the molar concentration of the test substance cannot be adjusted, the test substance may be dissolved in water, an organic solvent miscible with water (e.g., methanol, ethanol, acetonitrile, acetone, or N,N-dimethyl sulfoxide (DMSO)), or a mixture thereof (a mixture of water with an organic solvent, or a mixture of two or more organic solvents) such that the concentration of the test substance is, for example, about 0.01 mg/mL to about 10 mg/mL, typically about 0.1 mg/L to about 1 mg/mL.

An about 0.1 to about 100 μg/ mL, typically 1 to 10 μg/ mL, solution of the organic compound serving as the main measuring agent for the phototoxicity or photoallergy measuring reagent according to the present invention may then be added to the test substance solution in equal amounts. It is noted that the concentration and the amount added may be as described above and may also be appropriately adjusted, for example, by doubling the concentration of the measuring reagent while halving the amount added.

The concentration of the organic compound in the reaction solution for the reaction of the test substance with the organic compound is preferably 0.05 μmol/L to 400 μmol/L, more preferably 0.1 μmol/L to 100 μmol/L, even more preferably 1.0 μmol/L to 10 μmol/L.

The reaction can be performed by stirring the solution containing the organic compound and the test substance or allowing the solution to stand in the temperature range of, for example, about 4°C to about 60°C, preferably about 10°C to about 50°C, more preferably about 15°C to about 40°C, optionally with heating, typically for about 1 minute to about 2 days, preferably 1 hour to 2 days, more preferably 8 hours to 36 hours.

In the present invention, the test substance is reacted with the organic compound that is the N-(arylalkylcarbonyl)cysteine or the α-N-(arylalkylcarbonyl)lysine under irradiation with ultraviolet light, and the test substance is reacted with the organic compound that is the N-(arylalkylcarbonyl)cysteine or the α-N-(arylalkylcarbonyl)lysine without irradiation with ultraviolet light.

The ultraviolet light used is preferably ultraviolet light with a wavelength of 400 nm or less. The ultraviolet light in the present invention has a wavelength of 200 nm to 400 nm.

Irradiation with ultraviolet light may be performed over the entire reaction time or may be performed for only part of the reaction time. For example, irradiation with ultraviolet light may be performed at the start of the reaction, and the reaction may then be performed without irradiation with ultraviolet light.

Irradiation with ultraviolet light is preferably performed at 100 to 100,000 μW/cm$^2$, more preferably 500 to 10,000 μW/cm$^2$, even more preferably 1,000 to 5,000 μW/cm$^2$, for example, for 10 minutes to 5 hours, preferably 30 minutes to 3 hours.

The ultraviolet irradiation apparatus used in the Examples of the present invention was SXL-2500V2 (manufactured by Seric., Ltd.). Commercially available ultraviolet irradiation apparatuses can be used, including those manufactured by Nagano Science Co., Ltd., Dr. Hönle AG, UV-Technologie, and Atlas Material Technologies LCC.

In the present invention, the phototoxicity or photoallergy of the test substance can be measured from the difference between the depletion of the organic compound after the reaction under irradiation with ultraviolet light and the depletion of the organic compound after the reaction without irradiation with ultraviolet light. To examine the depletion of the organic compound after each reaction, the amount of the residual organic compound in the liquid mixture of the phototoxicity or photoallergy measuring reagent solution and the test substance solution may be analyzed.

If the phototoxicity or photoallergy measuring reagent can undergo any change in the reaction solution during the analysis of the amount of the residual organic compound, a reaction solution that contains the same components but no test substance (control group) may be separately prepared and analyzed where necessary, and the amount of the residual organic compound in that reaction solution may be used for correction.

For example, if the phototoxicity or photoallergy measuring reagent has a thiol group, it may be readily oxidized into a disulfide (dimer). Accordingly, when the amount of the residual organic compound is quantified, the disulfide may also be analyzed where necessary, and the total amount thereof may be used as the amount of the residual organic compound.

Whereas the reactivity (covalent bonding ability) of the test substance with the nucleophilic reagent (e.g., the phototoxicity or photoallergy measuring reagent) can be estimated by quantifying unreacted nucleophilic reagent, it is the most direct and proper evaluation to detect and quantify the product (reaction product) of the reaction of the test substance with the nucleophilic reagent. In the case of a mixture, if its constituent components are known and the reaction products of the components with the nucleophilic reagent are available, they can be used for quantification, for example, by high-performance liquid chromatography (HPLC)-fluorescence detection.

Although the method for analyzing the organic compound or the reaction product is not particularly limited, the test method preferably includes subjecting to chromatography the product obtained by the step of reacting the test substance with the organic compound. For example, the compound formed by the reaction, the organic compound, and the test substance may be separated and analyzed by a technique such as high-performance liquid chromatography (HPLC), gas chromatography (GC), or thin-layer chromatography (TLC). Examples of chromatography techniques that can be used for HPLC, GC, and TLC include reversed-phase chromatography, normal-phase chromatography, and ion-exchange chromatography. Examples of commercially available LC columns that can be used for such chromatography techniques include CAPCELL CORE C18 (manufactured by Osaka Soda Co., Ltd.), CAPCELL-PAK (manufactured by Osaka Soda Co., Ltd.), L-column ODS (manufactured by Chemicals Evaluation and Research Institute, Japan), Shodex Asahipak (manufactured by Showa Denko K.K.), CORTECS (manufactured by Waters Corporation), and Poroshell (manufactured by Agilent Technologies, Inc.). Examples of commercially available TLC plates include silica gel 60 F254 (manufactured by Merck & Co., Inc.) and Silica Gel Plate (manufactured by Nacalai tesque, Inc.).

In one example of the present invention, the depletion of the organic compound after the reaction of the test substance with the phototoxicity or photoallergy measuring reagent may be determined by an optical measurement using a fluorescence detector.

A molecule in the ground state transitions to an excited state by absorbing excitation light. A portion of the absorbed excitation energy is deactivated as vibration energy or other form of energy. After a non-radiative transition to a lower vibration state, the molecule returns to the ground state while emitting fluorescence. An optical measurement using a fluorescence detector is generally known as an analytical technique whose sensitivity is at least 10$^3$ times higher than that of absorption spectrophotometry. In addition, because this technique is intended for fluorescent substances, it has good selectivity and is used as a technique for analyzing trace amounts of substances. Because fluorescence intensity is proportional to the concentration of a fluorescent substance, quantitative analysis can be performed by creating a calibration curve. Commercially available fluorescence detectors can be used, including those manufactured by Shimadzu Corporation, Waters Corporation, Hitachi, Ltd., Agilent Technologies, Inc., and Osaka Soda Co., Ltd.

The optical measurement using a fluorescence detector is preferably performed at an excitation wavelength of 200 to 350 nm, more preferably 230 to 320 nm, even more preferably 250 to 300 nm, still even more preferably 270 to 300 nm, particularly preferably 280 to 290 nm, and a fluorescence wavelength of 200 to 400 nm, more preferably 300 to 370 nm, even more preferably 300 to 360 nm, particularly preferably 320 to 350 nm.

In another example of the present invention, the depletion of the organic compound after the reaction of the test substance with the phototoxicity or photoallergy measuring reagent may be determined by an optical measurement using an ultraviolet detector.

Commercially available ultraviolet detectors can be used, including those manufactured by Shimadzu Corporation, Waters Corporation, Hitachi, Ltd., and Agilent Technologies, Inc.

The optical measurement using an ultraviolet detector is preferably performed at a detection wavelength of 200 to 400 nm, more preferably 220 to 350 nm, even more preferably 250 to 300 nm.

For example, as the determination criteria for detection of phototoxicity or photoallergy from the difference between the depletion of the organic compound after the reaction under irradiation with ultraviolet light and the depletion of the organic compound after the reaction without irradiation with ultraviolet light, the test substance can be determined to be positive if one or more of the following criteria are satisfied and can be determined to be negative if none of the following criteria is satisfied:

(1) the difference obtained by subtracting the depletion of the N-(arylalkylcarbonyl)cysteine after the reaction without irradiation with ultraviolet light from the depletion of the N-(arylalkylcarbonyl)cysteine after the reaction under irradiation with ultraviolet light is 15% or more;

(2) the difference obtained by subtracting the depletion of the $\alpha$-N-(arylalkylcarbonyl)lysine after the reaction without irradiation with ultraviolet light from the depletion of the $\alpha$-N-(arylalkylcarbonyl)lysine after the reaction under irradiation with ultraviolet light is 15% or more; and

(3) the average of the difference in depletion in (1) and the difference in depletion in (2) is 10% or more.

The present invention will now be more specifically described with reference to the following examples, although these examples are not intended to limit the present invention.

Examples

The abbreviations in the examples have the following meaning:

EDTA:   ethylenediaminetetraacetic acid
NAC:    N-[2-(naphthalen-1-yl)acetyl]cysteine
NAL:    $\alpha$-N-[2-(naphthalen-1-yl)acetyl]lysine
TFA:    trifluoroacetic acid

Test Methods

(1) Preparation of Various Solutions

(1-1) 0.1 mmol/L EDTA Aqueous Solution

1) Into a 15 mL conical tube, 37.2 mg of EDTA·2Na·2H$_2$O (manufactured Dojindo Laboratories) is weighed, and it is dissolved by adding 10 mL of distilled water (manufactured by Hikari Pharmaceutical Co., Ltd., water for injection (Japanese Pharmacopoeia)) using a 25 mL measuring pipette (10 mmol/L EDTA aqueous solution).

2) To a 100 mL container, 49.5 mL of distilled water (manufactured by Hikari Pharmaceutical Co., Ltd., water for injection (Japanese Pharmacopoeia)) is added using a 50 mL measuring pipette, and 0.5 mL of the 10 mmol/L EDTA aqueous solution in 1) above is added and mixed so that the solution is diluted 100-fold (0.1 mmol/L EDTA aqueous solution).

(1-2) 100 mmol/L Phosphate Buffer (pH 8.0)

1) Into a 100 mL container, 0.6 g of anhydrous sodium dihydrogen phosphate (manufactured by FUJIFILM Wako Pure Chemical Corporation, Special Grade) is weighted, and it is dissolved by adding 50 mL of distilled water (manufactured by Hikari Pharmaceutical Co., Ltd., water for injection (Japanese Pharmacopoeia)) using a 50 mL measuring pipette.

2) To a 500 mL container, 300 mL of distilled water (manufactured by Hikari Pharmaceutical Co., Ltd., water for injection (Japanese Pharmacopoeia)) is added using a 50 mL (or 100 mL) measuring pipette.

3) After 4.26 g of anhydrous disodium hydrogen phosphate (manufactured by FUJIFILM Wako Pure Chemical Corporation, Special Grade) is weighted, it is added and dissolved into the distilled water (manufactured by Hikari Pharmaceutical Co., Ltd., water for injection (Japanese Pharmacopoeia)) in 2).

4) To the anhydrous disodium hydrogen phosphate solution in 3), 16 mL of the anhydrous sodium dihydrogen phosphate solution in 1) is added using a 25 mL measuring pipette.

5) Using a 25 mL measuring pipette, 17 mL of the solution in 4) is removed, and 1 mL of the 0.1 mmol/L EDTA aqueous solution is added to the remainder in 4) to a volume of 300 mL. The concentration of EDTA in this solution is 0.33 μmol/L, and the concentration of EDTA in a reaction solution is 0.25 μmol/L.

6) A portion of the solution is collected into another container, and the pH is measured using a pH meter to confirm that it is within the range of pH 7.9 to 8.1.

(1-3) 100 mmol/L Phosphate Buffer (pH 10.2)

1) Into a 500 mL container, 286 mL of distilled water (manufactured by Hikari Pharmaceutical Co., Ltd., water for injection (Japanese Pharmacopoeia)) is added using a 50 mL measuring pipette.

2) After 4.26 g of anhydrous disodium hydrogen phosphate is weighed, it is added and dissolved into the distilled water (manufactured by Hikari Pharmaceutical Co., Ltd., water for injection (Japanese Pharmacopoeia)) in 1).

3) Using a 25 mL measuring pipette, 14 mL of a 0.1 mol/L NaOH aqueous solution (manufactured by FUJIFILM Wako Pure Chemical Corporation, Special Grade) is added.

4) A portion of the solution is collected into another container, and the pH is measured using a pH meter (portable pH meter (HM-20P), Dkk-Toa Corporation) to confirm that it is within the range of pH 10.1 to 10.3.

(1-4) Reaction Stop Solution (2.5% (v/v) TFA Aqueous Solution or 0.5% (v/v) TFA Aqueous Solution)

To 100 mL of distilled water (manufactured by FUJIFILM Wako Pure Chemical Corporation), 2.5 mL of TFA (manufactured by FUJIFILM Wako Pure Chemical Corporation, Special Grade) is added (2.5% (v/v) TFA aqueous solution).

To 100 mL of distilled water (manufactured by FUJIFILM Wako Pure Chemical Corporation), 0.5 mL of TFA (manufactured by FUJIFILM Wako Pure Chemical Corporation, Special Grade) is added (0.5% (v/v) TFA aqueous solution).

(1-5) HPLC Mobile Phase A: 0.1% (v/v) TFA Aqueous Solution

To 1 L of distilled water (manufactured by FUJIFILM Wako Pure Chemical Corporation), 1.0 mL of TFA is added.

(1-6) HPLC Mobile Phase B: 0.1% (v/v) TFA Acetonitrile Solution

To 1 L of HPLC-grade acetonitrile (manufactured by FUJIFILM Wako Pure Chemical Corporation, for HPLC), 1.0 mL of TFA is added.

(2) Preparation of Nucleophilic Reagent Stock Solutions

(2-1) Preparation of NAC Stock Solution

The same stock solution is used for one test. The stock solution is stored in portions that can be used up for each test. A specific example of preparation is given below:

1) Into a 50 mL container, 11.6 mg (±0.1 mg) of NAC is weighed, and it is dissolved by adding 20 mL of the 100 mmol/L phosphate buffer (pH 8.0) using a 25 mL measuring pipette and gently stirring the mixture using a test tube mixer (2 mmol/L).

2) To a 500 mL container, 149.5 mL of the same buffer is added using a 50 mL measuring pipette, and 0.5 mL of the 2 mmol/L NAC solution is added and mixed by inversion so that the solution is diluted 300-fold (6.667 μmol/L).

(2-2) Preparation of NAL Stock Solution (Molecular Weight = 314.38)

The same stock solution is used for one test. The stock solution is stored in portions that can be used up for each test. A specific example of preparation is given below:

1) Into a 50 mL container, 12.6 mg (±0.1 mg) of NAL is weighed, and it is dissolved by adding 20 mL of the 100 mmol/L phosphate buffer (pH 10.2) using a 25 mL measuring pipette and gently stirring the mixture using a test tube mixer (2 mmol/L NAL solution).

2) To a 500 mL container, 149.5 mL of the same buffer is added using a 50 mL measuring pipette, and 0.5 mL of the 2 mmol/L NAL solution is added and mixed by inversion so that the solution is diluted 300-fold (6.667 $\mu$mol/L).

(3) Preparation of Test Substance Solutions

(3-1) Single Test Substance

A 1 mmol/L solution of a test substance in water, acetonitrile, acetone, or 5% by mass dimethyl sulfoxide (DMSO)/acetonitrile solution is prepared and used as a test substance solution. A solvent in which the test substance is soluble at a concentration of 1 mmol/L is used. If the test substance is soluble in a plurality of solvents, the solvent is selected in the following order of priority: water, acetonitrile, acetone, and 5% by mass DMSO/acetonitrile.

(3-2) Multi-Component Mixture of Test Substances

(3-2-1) Liquid Test Substances

Liquid test substances are used as-is as "undiluted solution". This "undiluted solution" may be diluted with a suitable solvent at a suitable ratio, for example, 1/10, 1/100, or 1/1,000.

(3-2-2) Solid Test Substances

Solid test substances are dissolved to the maximal possible concentration in a solvent in which they are most soluble. The solution with the maximal possible concentration is then tested as "undiluted solution". This "undiluted solution" may be diluted with a suitable solvent at a suitable ratio, for example, 1/10, 1/100, or 1/1,000.

(4) Reaction

(4-1) Addition

Test substance solutions are prepared on a 96-well plate (U96 PP-0.5 ML NATURAL, Thermo (NUNC)), mainly using a 12-channel pipette, and the reagents are added in the following amounts:

Nucleophilic reagents (NAC and NAL): 150 $\mu$L
Test substance solution: 50 $\mu$L

(4-2) Reaction

The plate is firmly sealed with a plate seal (resistant embossed seal, Shimadzu GLC Ltd.) and is shaken on a plate shaker (Titramax 100, Heidolph Instruments). After being spun down in a centrifuge, the reaction solutions are irradiated with light at 2,000 $\mu$W/cm$^2$ using an SXL-2500V2 ultraviolet irradiation apparatus (manufactured by SERIC., Ltd.) for 1 hour, followed by incubation at 25°C in a light-shielded state for 23 hours. As controls without light irradiation, reaction solutions are prepared, followed by incubation at 25°C in a light-shielded state for 24 hours.

(4-3) Reaction Stop

After incubation, the reaction is stopped by removing the plate seal and adding 50 $\mu$L of the reaction stop solution (2.5% (v/v) TFA) to each sample. For measurements using a fluorescence detector, 180 $\mu$L of the reaction stop solution (0.5% (v/v) TFA) is dispensed into each well of another plate in advance, and 20 $\mu$L of each sample is added so that the sample is diluted 10-fold.

(5) HPLC Measurement

The HPLC measurement conditions for the nucleophilic reagents are given below.

Table 1

Table 1: HPLC measurement conditions

| HPLC instrument | LC-20A (Prominence) series (Shimadzu Corporation) |
|---|---|
| Column | CAPCELL CORE C18 Column (3.0 × 150 mm, 2.7 μm) (Osaka Soda Co., Ltd.) |
| Detector | UV detection: SPD-M20A (Shimadzu Corporation) |
| | Fluorescence detection: RF10AXL, RF20Axs (Shimadzu Corporation) |
| Detection wavelength | UV detection: 281 nm |
| | Fluorescence detection: 284 nm (excitation), 333 nm (fluorescence) |
| Column temperature | 40°C |
| Sample temperature | 25°C |
| Injection volume | 8-20 μL |
| Eluent | A: water (0.1% trifluoroacetic acid) |
| | B: acetonitrile (0.1% trifluoroacetic acid) |
| Measurement time | 20 minutes |
| Elution conditions | [NAC]<br><br>Time (min.)　Flow rate (mL/min.)　%A　%B<br>0.0　0.3　70　30<br>9.5　0.3　45　55<br>10.0　0.3　0　100<br>13.0　0.3　0　100<br>13.5　0.3　70　30<br>20.0　End<br><br>[NAL]<br><br>Time (min.)　Flow rate (mL/min.)　%A　%B<br>0.0　0.3　80　20<br>9.5　0.3　55　45<br>10.0　0.3　0　100<br>13.0　0.3　0　100<br>13.5　0.3　80　20<br>20.0　End |

(6) Data Analysis

(6-1) Calculation of Depletion

The depletion of NAC or NAL is calculated from the average (n = 3) peak area of unreacted NAC or NAL after the reaction and the average (n = 3) peak area of NAC or NAL in a standard solution (before the reaction) by the following equations:

NAC depletion (% depletion) = [1 - (average peak area of unreacted NAC after reaction

/ average peak area of NAC) in standard solution (no test substance added)] × 100

$$\text{NAL depletion (\% depletion)} = [1 - (\text{average peak area of unreacted NAL after reaction}$$

$$/ \text{ average peak area of NAL}) \text{ in standard solution (no test substance added)}] \times 100$$

The average peak area of unreacted NAC after the reaction is the average area calculated from three measurements on unreacted NAC after the reaction. The average peak area of NAC in a standard solution (no test substance added) is the average area calculated from three measurements on NAC in a reaction solution prepared by adding the solvent used for dissolution of the test substance instead of the test substance solution.

The average peak area of unreacted NAL after the reaction is the average area calculated from three measurements on unreacted NAL after the reaction. The average peak area of NAL in a standard solution (no test substance added) is the average area calculated from three measurements on NAC in a reaction solution prepared by adding the solvent used for dissolution of the test substance instead of the test substance solution.

(7) Determination Criteria for Prediction of Photoallergy

"Phototoxicity and photoallergy" and "nonphototoxicity and nonphotoallergy" are determined from the depletion of NAC/NAL based on the following criteria:

(1) the difference obtained by subtracting the depletion of the N-(arylalkylcarbonyl)cysteine after the reaction without irradiation with ultraviolet light from the depletion of the N-(arylalkylcarbonyl)cysteine after the reaction under irradiation with ultraviolet light is 15% or more;
(2) the difference obtained by subtracting the depletion of the $\alpha$-N-(arylalkylcarbonyl)lysine after the reaction without irradiation with ultraviolet light from the depletion of the $\alpha$-N-(arylalkylcarbonyl)lysine after the reaction under irradiation with ultraviolet light is 15% or more; and
(3) the average of the difference in depletion in (1) and the difference in depletion in (2) is 10% or more.

The test substance is determined to be a phototoxic or photoallergic substance if one or more of (1) to (3) are satisfied.

The test substance is determined to be a nonphototoxic, nonphotoallergic substance if none of (1) to (3) is satisfied.

Example 1: Prediction of Phototoxicity and Photoallergy Using Common Chemical Substances

Commercially available chemical substances that were reported to be phototoxic or photoallergic were used for prediction of phototoxicity and photoallergy by the evaluation method according to the present invention.

Test substances:

Solutions of the 59 compounds listed in the following table in the respective solvents listed in the same table at a concentration of 1 mmol/L were prepared and used for testing. The names of the 59 compounds are given below:

Chlorpromazine HCl
6-Methylcoumarin
8-Methoxypsoralen (xanthotoxin)
Benzophenone
Bithionol
Enoxacin
Indomethacin
Piroxicam
Pyridoxine HCl
Tribromsalan
p-Phenylenediamine
Tetrachlorosalicylanilide
Diclofenac Na
Promethazine HCl
Quinine HCl ($2H_2O$)
Ketoprofen

Musk ambrette
Musk xylene
Octyl dimethyl PABA (2-ethylhexyl p-dimethylaminobenzoate)
Triclocarban
Dichlorophen
Fenticlor
Glibenclamide
Hydrochlorothiazide
Isoniazid
Omadine (Na salt)
Sulfanilamide
Sulfasalazine
4-Methyl-7-ethoxycoumarin
7-Methoxycoumarin
5-Methoxypsoralen (bergapten)
Methyl-N-methylanthranilate
Musk ketone
Acridine
Anthracene
Tetracycline
Methyl β-naphthyl ketone
Fenofibrate
4'-Methylbenzylidene camphor
Aspirin
Benzocaine
Erythromycin
Methyl salicylate
Penicillin G
Phenytoin
1,3-Butylene glycol
2-Propanol
Ascorbic acid
Cetyl alcohol
Ethanol
Glycerine
Isopropyl myristate
Lauric acid
Propylene glycol
Sodium laurate
Sodium lauryl sulfate
Sulisobenzone
Dimethyl sulfoxide (DMSO)
Lactic acid

Table 2-1

| No. | Name of compound | CAS | In vivo phototoxicity | In vivo photoallergy | Solvent |
|---|---|---|---|---|---|
| 1 | Chlorpromazine HCl | 69-09-0 | Positive | Positive | Water |
| 2 | 6-Methylcoumarin | 92-48-8 | Positive | Positive | Acetonitrile |
| 3 | 8-Methoxypsoralen | 298-81-7 | Positive | Positive | Acetonitrile |
| 4 | Benzophenone | 119-61-9 | Positive | Positive | Acetonitrile |
| 5 | Bithionol | 97-18-7 | Positive | Positive | Acetonitrile |
| 6 | Enoxacin | 74011-58-8 | Positive | Positive | Water |
| 7 | Indomethacin | 53-86-1 | Positive | Positive | Acetonitrile |

(continued)

| No. | Name of compound | CAS | In vivo phototoxicity | In vivo photoallergy | Solvent |
|---|---|---|---|---|---|
| 8 | Piroxicam | 36322-90-4 | Positive | Positive | Acetonitrile |
| 9 | Pyridoxine HCl | 58-56-0 | Positive | Positive | Water |
| 10 | Tribromsalan | 87-10-5 | Positive | Positive | Acetonitrile |
| 11 | p-Phenylenediamine | 106-50-3 | Positive | Positive | Acetonitrile |
| 12 | Tetrachlorosalicylanilide | 1154-59-2 | Positive | Positive | Acetonitrile |
| 13 | Diclofenac Na | 15307-79-6 | Positive | Positive | Water |
| 14 | Promethazine HCl | 58-33-3 | Positive | Positive | Water |
| 15 | Quinine HCl (2H$_2$O) | 6119-47-7 | Positive | Positive | Water |
| 16 | Ketoprofen | 22071-15-4 | Negative | Positive | Acetonitrile |
| 17 | Musk ambrette | 83-66-9 | Negative | Positive | Acetonitrile |
| 18 | Musk xylene | 81-15-2 | Negative | Positive | Acetonitrile |
| 19 | Octyl dimethyl PABA | 21245-02-3 | Negative | Positive | Acetonitrile |
| 20 | Triclocarban | 101-20-2 | Negative | Positive | 5% DMSO/ acetonitrile |
| 21 | Dichlorophen | 97-23-4 | - | Positive | Acetonitrile |
| 22 | Fenticlor | 97-24-5 | - | Positive | Acetonitrile |
| 23 | Glibenclamide | 10238-21-8 | - | Positive | 5% DMSO/ acetonitrile |
| 24 | Hydrochlorothiazide | 58-93-5 | - | Positive | Acetonitrile |
| 25 | Isoniazid | 54-85-3 | - | Positive | Water |
| 26 | Omadine (Na salt) | 3811-73-2 | - | Positive | Water |
| 27 | Sulfanilamide | 63-74-1 | - | Positive | Acetonitrile |
| 28 | Sulfasalazine | 599-79-1 | - | Positive | 5% DMSO/ acetonitrile |
| 29 | 4-Methyl-7-ethoxycoumarin | 87-05-8 | - | Positive | Acetonitrile |

Table 2-2

| No. | Name of compound | CAS | In vivo phototoxicity[1,2,3] | In vivo photoallergy [1,2] | Solvent |
|---|---|---|---|---|---|
| 30 | 7-Methoxycoumarin | 531-59-9 | - | Positive | Acetonitrile |
| 31 | 5-Methoxypsoralen | 484-20-8 | Positive | Negative | Acetonitrile |
| 32 | Methyl-N-methylanthranilate | 85-91-6 | Positive | Negative | Acetonitrile |
| 33 | Musk ketone | 81-14-1 | Positive | Negative | Acetonitrile |
| 34 | Acridine | 260-94-6 | Positive | Negative | Acetonitrile |
| 35 | Anthracene | 120-12-7 | Positive | Negative | Acetonitrile |
| 36 | Tetracycline | 64-75-5 | Positive | Negative | Acetonitrile |
| 37 | Methyl β-naphthyl ketone | 93-08-3 | Positive | - | Acetonitrile |
| 38 | Fenofibrate | 49562-28-9 | Positive | - | Acetonitrile |
| 39 | 4'-Methylbenzylidene camphor | 36861-47-9 | Negative | Negative | Acetonitrile |
| 40 | Aspirin | 50-78-2 | Negative | Negative | Acetonitrile |
| 41 | Benzocaine | 94-09-7 | Negative | Negative | Acetonitrile |

(continued)

| No. | Name of compound | CAS | In vivo phototoxicity[1,2,3] | In vivo photoallergy [1,2] | Solvent |
|---|---|---|---|---|---|
| 42 | Erythromycin | 114-07-8 | Negative | Negative | Acetonitrile |
| 43 | Methyl salicylate | 119-36-8 | Negative | Negative | Acetonitrile |
| 44 | Penicillin G | 113-98-4 | Negative | Negative | Water |
| 45 | Phenytoin | 57-41-0 | Negative | Negative | Acetonitrile |
| 46 | 1,3-Butylene glycol | 107-88-0 | Negative | Negative | Water |
| 47 | 2-Propanol | 67-63-0 | Negative | Negative | Water |
| 48 | Ascorbic acid | 50-81-7 | Negative | Negative | Water |
| 49 | Cetyl alcohol | 36653-82-4 | Negative | Negative | Acetonitrile |
| 50 | Ethanol | 64-17-5 | Negative | Negative | Water |
| 51 | Glycerine | 56-81-5 | Negative | Negative | Water |
| 52 | Isopropyl myristate | 110-27-0 | Negative | Negative | Acetonitrile |
| 53 | Lauric acid | 143-07-7 | Negative | Negative | Acetonitrile |
| 54 | Propylene glycol | 57-55-6 | Negative | Negative | Water |
| 55 | Sodium laurate | 629-25-4 | Negative | Negative | Water |
| 56 | Sodium lauryl sulfate | 151-21-3 | Negative | Negative | Water |
| 57 | Sulisobenzone | 4065-45-6 | Negative | Negative | Water |
| 58 | DMSO | 67-68-5 | Negative | Negative | Water |
| 59 | Lactic acid | 50-21-5 | Negative | Negative | Water |

For in vivo phototoxicity, see References 1 to 3 below.

For in vivo photoallergy, see References 1 and 2 below.

References:

1. Onoue S, Ohtake H, Suzuki G, Seto Y, Nishida H, Hirota M, Ashikaga T, Kouzuki H, 2016, Comparative study on prediction performance of photosafety testing tools on photoallergens, Toxicology In Vitro, 33:147-52
2. Onoue S, Suzuki G, Kato M, Hirota M, Nishida H, Kitagaki M, Kouzuki H, Yamada S, 2013, Non-animal photosafety assessment approaches for cosmetics based on the photochemical and photobiochemical properties, Toxicology In Vitro, 27(8):2316-24
3. Seto Y, Kato M, Yamada S, Onoue S, 2013, Development of micellar reactive oxygen species assay for photosafety evaluation of poorly water-soluble chemicals, Toxicology In Vitro, 27(6): 1838-46

As the conditions without light irradiation, the 1 mmol/L test substance solutions were each reacted with the nucleophilic reagents, namely, NAC and NAL, at 25°C for 24 hours. As the conditions with light irradiation, the 1 mmol/L test substance solutions were each irradiated at room temperature with light at 2,000 $\mu W/cm^2$ for 1 hour and were then reacted at 25°C for 23 hours.

All reactions were performed on the 96-well plate. For each sample, n = 3. As comparative controls, reaction solutions to which only the solvents, which are used to dissolve the test substances, were added were also prepared. The reaction solutions were prepared such that the concentrations of NAC and NAL were 5 $\mu mol/L$ and the concentration of the test substance was 0.5 mmol/L. After 24 hours, HPLC measurements were made by two detection methods, namely, light absorption detection on a photodiode array (PDA) detector and fluorescence detection on a fluorescence detector. For PDA detection, a trifluoroacetic acid (TFA) aqueous solution was added to the reaction solutions to a final TFA concentration of 0.5% (v/v) before use in the HPLC measurements. For fluorescence detection, each sample was diluted tenfold with a 0.5% (v/v) trifluoroacetic acid (TFA) aqueous solution before use in the HPLC measurements. Thereafter, the chromatographs and the depletions of NAC and NAL based on the measurement results for each compound were compared.

Measurement conditions:

The depletions of the nucleophilic reagents (NAC and NAL) were determined by UV detection at 281 nm or fluorescence detection at an excitation wavelength of 284 nm and a fluorescence wavelength of 333 nm under the HPLC measurement conditions given in "(5) HPLC Measurement" above.

Results:

The depletions of NAC and NAL and the average scores thereof after the reactions under light irradiation and without light irradiation and the differences between those obtained after light irradiation and those obtained without light irradiation for each compound are given in the following tables.

1. Results of UV Detection

Table 3-1

| No. | Name of compound | In vivo phototoxicity | In vivo photoallergy | Under light irradiation | | | | | Without light irradiation | | | | | Difference in depletion (under light irradiation - without light irradiation) | | |
|---|---|---|---|---|---|---|---|---|---|---|---|---|---|---|---|---|
| | | | | NAC | | NAL | | Average score (%) | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | |
| 1 | Chlorpromazine HCl | Positive | Positive | 96.2 | 0.3 | 15.1 | 0.3 | 55.7 | 9.7 | 1.9 | 0.1 | 0.2 | 4.9 | 86.5 | 15.0 | 50.8 |
| 2 | 6-Methylcoumarin | Positive | Positive | 96.3 | 0.8 | 5.7 | 2.9 | 51.0 | 0.5 | 0.5 | 0.2 | 0.5 | 0.4 | 95.8 | 5.5 | 50.7 |
| 3 | 8-Methoxypsoralen | Positive | Positive | 95.6 | 0.4 | -378.4 | | - | 0.2 | 0.6 | -103.9 | | - | 95.4 | - | - |
| 4 | Benzophenone | Positive | Positive | 97.8 | 0.4 | 3.5 | 0.5 | 50.6 | 0.0 | 0.7 | 0.1 | 0.2 | 0.1 | 97.8 | 3.4 | 50.6 |
| 5 | Bithionol | Positive | Positive | 96.2 | 0.2 | 92.2 | 0.5 | 94.2 | 28.8 | 0.5 | 0.0 | 0.4 | 14.4 | 67.4 | 92.2 | 79.8 |
| 6 | Enoxacin | Positive | Positive | 98.1 | 0.9 | -21.5 | | - | 0.0 | 0.2 | 0.2 | 0.3 | 0.1 | 98.1 | - | - |
| 7 | Indomethacin | Positive | Positive | 3.4 | 3.6 | 1.7 | 0.2 | 2.5 | 0.0 | 1.2 | 0.9 | 0.2 | 0.5 | 3.4 | 0.7 | 2.1 |
| 8 | Piroxicam | Positive | Positive | 83.9 | 1.8 | 0.0 | 0.0 | 42.0 | 1.6 | 0.5 | 0.1 | 0.4 | 0.9 | 82.3 | -0.1 | 41.1 |
| 9 | Pyridoxine HCl | Positive | Positive | 100.0 | 0.0 | 6.8 | 0.3 | 53.4 | 0.0 | 0.0 | 0.0 | 0.1 | 0.0 | 100.0 | 6.8 | 53.4 |
| 10 | Tribromsalan | Positive | Positive | 98.4 | 0.1 | 77.8 | 0.9 | 88.1 | 2.7 | 0.6 | 0.3 | 0.2 | 1.5 | 95.7 | 77.5 | 86.6 |

Table 3-2

| No. | Name of compound | In vivo photo-toxicity | In vivo photo-toallergy | Under light irradiation | | | | | Without light irradiation | | | | | Difference in depletion (under light irradiation - without light irradiation) | | |
|---|---|---|---|---|---|---|---|---|---|---|---|---|---|---|---|---|
| | | | | NAC | | NAL | | Average score (%) | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | |
| 11 | p-Phenylenediamine | Positive | Positive | 100.0 | 0.0 | 74.0 | 0.1 | 87.0 | 100.0 | 0.0 | 73.6 | 0.6 | 86.8 | 0.0 | 0.4 | 0.2 |
| 12 | Tetrachlorosalicylanilide | Positive | Positive | -200.9 | | 82.1 | 1.0 | - | 66.8 | 1.3 | 4.2 | 2.0 | 35.5 | - | 77.9 | - |
| 13 | Diclofenac Na | Positive | Positive | 100.0 | 0.0 | -4.1 | | - | 0.6 | 1.8 | 0.0 | 0.0 | 0.3 | 99.4 | - | - |
| 14 | Promethazine HCl | Positive | Positive | 89.5 | 0.1 | -438.6 | | - | 27.6 | 0.1 | 3.5 | 1.9 | 15.6 | 61.9 | - | - |
| 15 | Quinine HCl (2H$_2$O) | Positive | Positive | 100.0 | 0.0 | 4.1 | 1.3 | 52.1 | 1.1 | 0.3 | 0.0 | 0.0 | 0.6 | 98.9 | 4.1 | 51.5 |
| 16 | Ketoprofen | Negative | Positive | 92.5 | 0.1 | 26.5 | 0.1 | 59.5 | 0.0 | 1.0 | 0.4 | 0.2 | 0.2 | 92.5 | 26.1 | 59.3 |
| 17 | Musk ambrette | Negative | Positive | 97.3 | 0.1 | 5.4 | 1.0 | 51.4 | 0.0 | 0.4 | 0.0 | 0.2 | 0.0 | 97.3 | 5.4 | 51.4 |
| 18 | Musk xylene | Negative | Positive | 89.3 | 0.5 | 6.5 | 0.3 | 47.9 | 0.1 | 0.8 | 0.0 | 0.3 | 0.0 | 89.2 | 6.5 | 47.8 |
| 19 | Octyl dimethyl PABA | Negative | Positive | 99.5 | 0.8 | 0.9 | 0.4 | 50.2 | 1.9 | 0.6 | 0.0 | 0.0 | 1.0 | 97.6 | 0.9 | 49.3 |
| 20 | Triclocarban | Negative | Positive | 1.9 | 2.1 | 0.5 | 0.2 | 1.2 | 0.0 | 0.4 | 0.0 | 0.0 | 0.0 | 1.9 | 0.5 | 1.2 |

Table 3-3

| No. | Name of compound | In vivo photo-toxicity | In vivo pho-toallergy | Under light irradiation | | | | | | Without light irradiation | | | | | | Difference in depletion (under light irradiation - without light irradiation) | | |
|---|---|---|---|---|---|---|---|---|---|---|---|---|---|---|---|---|---|---|
| | | | | NAC | | NAL | | Average score (%) | | NAC | | NAL | | Average score (%) | | NAC (%) | NAL (%) | Average score (%) |
| | | | | Depletion (%) | SD | Depletion (%) | SD | | | Depletion (%) | SD | Depletion (%) | SD | | | | | |
| 21 | Dichlorophen | - | Positive | 94.4 | 0.4 | 14.8 | 0.6 | 54.6 | | 4.2 | 0.3 | 0.2 | 0.2 | 2.2 | | 90.2 | 14.7 | 52.4 |
| 22 | Fenticlor | - | Positive | 63.5 | 1.9 | 86.1 | 0.4 | 74.8 | | 41.2 | 0.0 | 0.5 | 0.1 | 20.9 | | 22.3 | 85.6 | 53.9 |
| 23 | Glibenclamide | - | Positive | 38.9 | 1.3 | 1.2 | 0.2 | 20.1 | | 0.6 | 0.6 | 0.3 | 0.1 | 0.5 | | 38.3 | 0.9 | 19.6 |
| 24 | Hydrochlorothiazide | - | Positive | 53.3 | 2.7 | 1.7 | 0.4 | 27.5 | | 0.4 | 0.9 | 0.0 | 0.0 | 0.2 | | 52.8 | 1.7 | 27.3 |
| 25 | Isoniazid | - | Positive | 0.0 | 0.0 | 0.0 | 0.0 | 0.0 | | 0.0 | 0.0 | 0.0 | 0.0 | 0.0 | | 0.0 | 0.0 | 0.0 |
| 26 | Omadine (Na salt) | - | Positive | 100.0 | 0.0 | 21.9 | 1.9 | 61.0 | | 10.7 | 0.5 | -34.1 | | - | | 89.3 | - | - |
| 27 | Sulfanilamide | - | Positive | 26.1 | 1.8 | 0.0 | 0.0 | 13.1 | | 0.6 | 0.5 | 0.2 | 0.6 | 0.4 | | 25.5 | -0.2 | 12.7 |
| 28 | Sulfasalazine | - | Positive | -7820.7 | | -0.3 | 0.3 | - | | -8048.0 | | 0.0 | 0.2 | - | | - | -0.3 | - |
| 29 | 4-Methyl-7-ethoxycoumarin | - | Positive | 93.6 | 0.1 | 20.3 | 0.5 | 57.0 | | 0.0 | 0.0 | 1.0 | 1.9 | 0.5 | | 93.6 | 19.3 | 56.4 |
| 30 | 7-Methoxycoumarin | - | Positive | 94.8 | 0.2 | 16.8 | 9.1 | 55.8 | | 0.0 | 0.0 | -25.1 | | - | | 94.8 | - | - |

Table 3-4

| No. | Name of compound | In vivo photo-toxicity | In vivo pho-toallergy | Under light irradiation | | | | | | Without light irradiation | | | | | | Difference in depletion (under light irradiation - without light irradiation) | | |
|---|---|---|---|---|---|---|---|---|---|---|---|---|---|---|---|---|---|---|
| | | | | NAC | | NAL | | Average score (%) | | NAC | | NAL | | Average score (%) | | NAC (%) | NAL (%) | Average score (%) |
| | | | | Depletion (%) | SD | Depletion (%) | SD | | | Depletion (%) | SD | Depletion (%) | SD | | | | | |
| 31 | 5-Methoxypsoralen | Positive | Negative | 90.6 | 1.4 | 8.4 | 0.2 | 49.5 | | 1.1 | 0.5 | 0.2 | 0.2 | 0.6 | | 89.6 | 8.2 | 48.9 |
| 32 | Methyl-N-methylanthranilate | Positive | Negative | 100.0 | 0.0 | 20.7 | 1.5 | 60.3 | | 9.7 | 0.5 | 0.0 | 0.0 | 4.8 | | 90.3 | 20.7 | 55.5 |
| 33 | Musk ketone | Positive | Negative | 66.2 | 1.6 | 7.8 | 0.7 | 37.0 | | 0.0 | 0.0 | 0.0 | 0.0 | 0.0 | | 66.2 | 7.8 | 37.0 |
| 34 | Acridine | Positive | Negative | 95.9 | 0.1 | 8.3 | 0.4 | 52.1 | | 0.7 | 0.3 | 0.4 | 0.2 | 0.5 | | 95.2 | 8.0 | 51.6 |
| 35 | Anthracene | Positive | Negative | 58.8 | 0.8 | 100.0 | 0.0 | 79.4 | | 0.8 | 0.6 | 0.2 | 0.3 | 0.5 | | 58.0 | 99.8 | 78.9 |
| 36 | Tetracycline | Positive | Negative | 44.6 | 1.0 | 27.6 | 0.2 | 36.1 | | -59.4 | | 5.1 | 0.1 | -27.1 | | - | 22.5 | - |
| 37 | Methyl β-naphthyl ketone | Positive | - | 100.0 | 0.0 | 8.4 | 0.5 | 54.2 | | 0.6 | 0.4 | 1.5 | 1.9 | 1.1 | | 99.4 | 6.9 | 53.1 |
| 38 | Fenofibrate | Positive | - | -1178.7 | | 40.7 | 1.7 | - | | 0.0 | 0.0 | 0.0 | 0.0 | 0.0 | | - | 40.7 | - |
| 39 | 4'-Methylbenzylidene camphor | Negative | Negative | 4.3 | 1.4 | 0.0 | 0.0 | 2.1 | | 0.7 | 0.7 | 0.0 | 0.0 | 0.3 | | 3.6 | 0.0 | 1.8 |
| 40 | Aspirin | Negative | Negative | 0.0 | 0.0 | 22.9 | 0.1 | 11.5 | | 1.0 | 0.4 | 22.8 | 0.4 | 11.9 | | -1.0 | 0.1 | -0.4 |

Table 3-5

| No. | Name of compound | In vivo photo-toxicity | In vivo photo-toallergy | Under light irradiation | | | | | | Without light irradiation | | | | | | Difference in depletion (under light irradiation - without light irradiation) | | |
|---|---|---|---|---|---|---|---|---|---|---|---|---|---|---|---|---|---|---|
| | | | | NAC | | NAL | | Average score (%) | | NAC | | NAL | | Average score (%) | | NAC (%) | NAL (%) | Average score (%) |
| | | | | Depletion (%) | SD | Depletion (%) | SD | | | Depletion (%) | SD | Depletion (%) | SD | | | | | |
| 41 | Benzocaine | Negative | Negative | 4.5 | 0.8 | 0.0 | 0.0 | 2.3 | | 1.0 | 0.5 | 0.2 | 0.5 | 0.6 | | 3.5 | -0.2 | 1.6 |
| 42 | Erythromycin | Negative | Negative | 0.0 | 0.0 | 0.0 | 0.0 | 0.0 | | 0.0 | 0.0 | 0.0 | 0.0 | 0.0 | | 0.0 | 0.0 | 0.0 |
| 43 | Methyl salicylate | Negative | Negative | 28.4 | 0.4 | 6.1 | 0.4 | 17.2 | | 0.2 | 0.4 | 0.4 | 0.3 | 0.3 | | 28.2 | 5.6 | 16.9 |
| 44 | Penicillin G | Negative | Negative | 2.8 | 0.5 | 1.6 | 0.3 | 2.2 | | 1.4 | 0.4 | 1.9 | 0.2 | 1.6 | | 1.5 | -0.2 | 0.6 |
| 45 | Phenytoin | Negative | Negative | 0.5 | 0.3 | 0.0 | 0.0 | 0.3 | | 0.0 | 0.2 | 0.0 | 0.0 | 0.0 | | 0.5 | 0.0 | 0.3 |
| 46 | 1,3-Butylene glycol | Negative | Negative | 0.7 | 0.9 | 0.0 | 0.0 | 0.4 | | 0.0 | 0.0 | 0.0 | 0.0 | 0.0 | | 0.7 | 0.0 | 0.4 |
| 47 | 2-Propanol | Negative | Negative | 1.7 | 0.9 | 0.3 | 0.4 | 1.0 | | 0.0 | 0.0 | 1.5 | 0.5 | 0.8 | | 1.7 | -1.2 | 0.2 |
| 48 | Ascorbic acid | Negative | Negative | 72.8 | 0.7 | 0.0 | 0.0 | 36.4 | | 72.3 | 0.6 | 0.0 | 0.0 | 36.1 | | 0.6 | 0.0 | 0.3 |
| 49 | Cetyl alcohol | Negative | Negative | 5.5 | 0.3 | 6.1 | 0.5 | 5.8 | | 1.8 | 0.5 | 2.8 | 0.2 | 2.3 | | 3.7 | 3.3 | 3.5 |
| 50 | Ethanol | Negative | Negative | 0.4 | 0.4 | 0.0 | 0.0 | 0.2 | | 0.0 | 0.0 | 1.3 | 0.8 | 0.6 | | 0.4 | -1.3 | -0.5 |

Table 3-6

| No. | Name of com-pound | In vivo photo-toxicity | In vivo pho-toallergy | Under light irradiation | | | | | | Without light irradiation | | | | | | Difference in depletion (under light irradiation - without light irradiation) | | |
| | | | | NAC | | NAL | | Average score (%) | | NAC | | NAL | | Average score (%) | | NAC (%) | NAL (%) | Average score (%) |
| | | | | Depletion (%) | SD | Depletion (%) | SD | | | Depletion (%) | SD | Depletion (%) | SD | | | | | |
| 51 | Glycerine | Negative | Negative | 0.0 | 0.0 | 0.0 | 0.0 | 0.0 | | 0.0 | 0.0 | 1.5 | 1.4 | 0.8 | | 0.0 | -1.5 | -0.8 |
| 52 | Isopropyl myristate | Negative | Negative | 1.8 | 0.4 | 0.0 | 0.0 | 0.9 | | 0.0 | 0.0 | 0.0 | 0.0 | 0.0 | | 1.8 | 0.0 | 0.9 |
| 53 | Lauric acid | Negative | Negative | 0.0 | 0.0 | 0.0 | 0.0 | 0.0 | | 0.1 | 0.3 | 0.1 | 0.2 | 0.1 | | -0.1 | -0.1 | -0.1 |
| 54 | Propylene glycol | Negative | Negative | 0.2 | 0.6 | 0.0 | 0.0 | 0.1 | | 0.0 | 0.0 | 0.0 | 0.0 | 0.0 | | 0.2 | 0.0 | 0.1 |
| 55 | Sodium laurate | Negative | Negative | 0.0 | 0.0 | 0.0 | 0.0 | 0.0 | | 0.0 | 0.0 | 0.0 | 0.0 | 0.0 | | 0.0 | 0.0 | 0.0 |
| 56 | Sodium lauryl sulfate | Negative | Negative | 0.0 | 0.0 | 0.0 | 0.0 | 0.0 | | 0.0 | 0.0 | 0.3 | 0.9 | 0.2 | | 0.0 | -0.3 | -0.2 |
| 57 | Sulisobenzone | Negative | Negative | 11.9 | 0.5 | 0.0 | 0.0 | 5.9 | | 0.0 | 0.8 | 0.0 | 0.0 | 0.0 | | 11.9 | 0.0 | 5.9 |
| 58 | DMSO | Negative | Negative | 0.7 | 0.3 | 0.0 | 0.0 | 0.4 | | 0.0 | 0.0 | 0.2 | 0.6 | 0.1 | | 0.7 | -0.2 | 0.3 |
| 59 | Lactic acid | Negative | Negative | 0.0 | 0.0 | 0.0 | 0.0 | 0.0 | | 0.0 | 0.0 | 0.3 | 0.4 | 0.1 | | 0.0 | -0.3 | -0.1 |

2. Results of Fluorescence Detection

Table 4-1

| No. | Name of compound | In vivo photo-toxicity | In vivo pho-toallergy | Under light irradiation | | | | | Without light irradiation | | | | | Difference in depletion (under light irradiation - without light irradiation) | | |
| --- | --- | --- | --- | --- | --- | --- | --- | --- | --- | --- | --- | --- | --- | --- | --- | --- |
| | | | | NAC | | NAL | | Average score (%) | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | |
| 1 | Chlorpromazine HCl | Positive | Positive | 100.0 | 0.0 | 14.0 | 0.3 | 57.0 | 3.0 | 0.7 | 0.0 | 0.0 | 1.5 | 97.0 | 14.0 | 55.5 |
| 2 | 6-Methylcoumarin | Positive | Positive | 87.0 | 5.3 | 10.8 | 0.1 | 48.9 | 0.5 | 0.2 | 0.0 | 0.0 | 0.3 | 86.5 | 10.8 | 48.6 |
| 3 | 8-Methoxypsoralen | Positive | Positive | 98.6 | 0.2 | 45.4 | 1.1 | 72.0 | 0.0 | 0.0 | 8.1 | 0.9 | 4.1 | 98.6 | 37.3 | 67.9 |
| 4 | Benzophenone | Positive | Positive | 97.9 | 0.4 | 3.1 | 0.2 | 50.5 | 0.0 | 0.0 | 0.0 | 0.0 | 0.0 | 97.9 | 3.1 | 50.5 |
| 5 | Bithionol | Positive | Positive | 87.1 | 0.4 | 88.4 | 0.2 | 87.8 | 20.3 | 0.1 | 0.0 | 0.0 | 10.1 | 66.8 | 88.4 | 77.6 |
| 6 | Enoxacin | Positive | Positive | 98.6 | 0.0 | 1.9 | 0.2 | 50.2 | 0.0 | 0.0 | 0.0 | 0.0 | 0.0 | 98.6 | 1.9 | 50.2 |
| 7 | Indomethacin | Positive | Positive | 5.5 | 1.4 | 1.2 | 0.4 | 3.4 | 0.0 | 0.9 | 0.1 | 0.2 | 0.1 | 5.5 | 1.1 | 3.3 |
| 8 | Piroxicam | Positive | Positive | 86.6 | 0.5 | 5.2 | 1.4 | 45.9 | 0.0 | 0.0 | 0.0 | 0.0 | 0.0 | 86.6 | 5.2 | 45.9 |
| 9 | Pyridoxine HCl | Positive | Positive | 100.0 | 0.0 | 7.2 | 0.8 | 53.6 | 0.5 | 0.7 | 0.0 | 0.3 | 0.2 | 99.5 | 7.2 | 53.3 |
| 10 | Tribromsalan | Positive | Positive | 98.9 | 0.0 | 80.8 | 0.4 | 89.8 | 3.4 | 2.0 | 0.7 | 0.6 | 2.1 | 95.5 | 80.0 | 87.8 |
| 11 | Phenylenediamine | Positive | Positive | 99.6 | 0.2 | 73.6 | 0.2 | 86.6 | 99.9 | 0.0 | 70.7 | 0.8 | 85.3 | -0.3 | 3.0 | 1.3 |

Table 4-2

| No. | Name of compound | In vivo photo-toxicity | In vivo pho-toallergy | Under light irradiation | | | | | Without light irradiation | | | | | Difference in depletion (under light irradiation - without light irradiation) | | |
|---|---|---|---|---|---|---|---|---|---|---|---|---|---|---|---|---|
| | | | | NAC | | NAL | | Average score (%) | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | |
| 12 | Tetrachlorosalicylani-lide | Positive | Positive | 97.4 | 0.2 | 86.5 | 0.2 | 92.0 | 58.0 | 1.9 | 5.0 | 2.3 | 31.5 | 39.4 | 81.5 | 60.4 |
| 13 | Diclofenac Na | Positive | Positive | 100.0 | 0.0 | 0.0 | 0.0 | 50.0 | 0.0 | 0.0 | 0.0 | 0.0 | 0.0 | 100.0 | 0.0 | 50.0 |
| 14 | Promethazine HCl | Positive | Positive | 100.0 | 0.0 | 7.3 | 0.9 | 53.7 | 23.6 | 0.4 | 0.8 | 0.4 | 12.2 | 76.4 | 6.6 | 41.5 |
| 15 | Quinine HCl (2H$_2$O) | Positive | Positive | 99.8 | 0.0 | 0.7 | 0.8 | 50.3 | 1.0 | 0.3 | 0.0 | 0.0 | 0.5 | 98.8 | 0.7 | 49.8 |
| 16 | Ketoprofen | Negative | Positive | 91.4 | 0.3 | 23.4 | 0.3 | 57.4 | 0.0 | 0.0 | 0.0 | 0.0 | 0.0 | 91.4 | 23.4 | 57.4 |
| 17 | Musk ambrette | Negative | Positive | 98.1 | 0.1 | 6.6 | 0.3 | 52.3 | 0.0 | 1.5 | 0.0 | 0.2 | 0.0 | 98.1 | 6.6 | 52.3 |
| 18 | Musk xylene | Negative | Positive | 88.9 | 1.1 | 6.4 | 0.5 | 47.6 | 1.2 | 1.6 | 0.0 | 0.3 | 0.6 | 87.7 | 6.4 | 47.0 |
| 19 | Octyl dimethyl PABA | Negative | Positive | 98.1 | 0.2 | 1.3 | 0.1 | 49.7 | 5.5 | 0.9 | 0.0 | 0.0 | 2.7 | 92.6 | 1.3 | 47.0 |
| 20 | Triclocarban | Negative | Positive | 1.4 | 0.7 | 0.7 | 0.3 | 1.1 | 0.0 | 0.6 | 0.7 | 1.7 | 0.3 | 1.4 | 0.1 | 0.7 |
| 21 | Dichlorophen | - | Positive | 98.5 | 0.1 | 14.5 | 0.4 | 56.5 | 4.9 | 0.9 | 0.3 | 0.1 | 2.6 | 93.6 | 14.2 | 53.9 |
| 22 | Fenticlor | - | Positive | 97.7 | 0.1 | 81.4 | 0.5 | 89.5 | 48.5 | 0.4 | 0.0 | 0.2 | 24.3 | 49.1 | 81.4 | 65.3 |

Table 4-3

| No. | Name of compound | In vivo photo-toxicity | In vivo pho-toallergy | Under light irradiation | | | | | Without light irradiation | | | | | Difference in depletion (under light irradiation - without light irradiation) | | |
|---|---|---|---|---|---|---|---|---|---|---|---|---|---|---|---|---|
| | | | | NAC | | NAL | | Average score (%) | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | |
| 23 | Glibenclamide | - | Positive | 36.7 | 0.2 | 1.2 | 0.2 | 19.0 | 0.0 | 0.9 | 0.0 | 0.2 | 0.0 | 36.7 | 1.2 | 19.0 |
| 24 | Hydrochlorothiazide | - | Positive | 56.7 | 0.4 | 0.0 | 0.0 | 28.3 | 0.0 | 0.0 | 0.0 | 0.0 | 0.0 | 56.7 | 0.0 | 28.3 |
| 25 | Isoniazid | - | Positive | 2.5 | 0.7 | 0.2 | 0.5 | 1.3 | 0.0 | 0.8 | 0.5 | 0.1 | 0.3 | 0.0 | 0.0 | 0.0 |
| 26 | Omadine (Na salt) | - | Positive | 100.0 | 0.0 | 13.3 | 0.4 | 56.6 | 8.4 | 1.0 | 0.0 | 0.5 | 4.2 | 91.6 | 13.3 | 52.4 |
| 27 | Sulfanilamide | - | Positive | 29.1 | 1.9 | 0.0 | 0.0 | 14.6 | 0.0 | 0.0 | 0.0 | 0.0 | 0.0 | 29.1 | 0.0 | 14.6 |
| 28 | Sulfasalazine | - | Positive | 4.2 | 0.0 | 0.8 | 0.4 | 2.5 | 3.0 | 0.5 | 1.7 | 2.1 | 2.3 | 1.2 | -0.9 | 0.2 |
| 29 | 4-Methyl-7-ethoxycoumarin | - | Positive | 99.5 | 0.7 | 21.1 | 1.4 | 60.3 | 0.0 | 0.0 | 0.0 | 0.0 | 0.0 | 99.5 | 21.1 | 60.3 |
| 30 | 7-Methoxycoumarin | - | Positive | 91.9 | 0.6 | 6.2 | 0.2 | 49.1 | 0.0 | 0.5 | 0.2 | 0.3 | 0.1 | 91.9 | 6.0 | 48.9 |
| 31 | 5 -Methoxypsoralen | Positive | Negative | 91.9 | 0.6 | 6.2 | 0.2 | 49.1 | 0.0 | 0.5 | 0.2 | 0.3 | 0.1 | 91.9 | 6.0 | 48.9 |
| 32 | Methyl-N-methylanthranilate | Positive | Negative | 99.8 | 0.0 | 22.7 | 1.8 | 61.3 | 0.7 | 0.8 | 0.0 | 0.0 | 0.4 | 99.1 | 22.7 | 60.9 |
| 33 | Musk ketone | Positive | Negative | 65.0 | 1.3 | 8.0 | 0.3 | 36.5 | 0.0 | 0.0 | 0.0 | 0.0 | 0.0 | 65.0 | 8.0 | 36.5 |

Table 4-4

| No. | Name of compound | In vivo phototoxicity | In vivo photoallergy | Under light irradiation | | | | | Without light irradiation | | | | | Difference in depletion (under light irradiation - without light irradiation) | | |
|---|---|---|---|---|---|---|---|---|---|---|---|---|---|---|---|---|
| | | | | NAC | | NAL | | Average score (%) | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | |
| 34 | Acridine | Positive | Negative | 95.9 | 0.3 | 6.9 | 0.4 | 51.4 | 0.0 | 0.9 | 0.0 | 0.3 | 0.0 | 95.9 | 6.9 | 51.4 |
| 35 | Anthracene | Positive | Negative | 99.1 | 0.1 | 99.3 | 0.0 | 99.2 | 0.0 | 1.2 | 0.0 | 0.1 | 0.0 | 99.2 | 99.3 | 99.2 |
| 36 | Tetracycline | Positive | Negative | 100.0 | 0.0 | 28.6 | 0.5 | 64.3 | 56.6 | 0.7 | 3.0 | 0.2 | 29.8 | 43.4 | 25.6 | 34.5 |
| 37 | Methyl β-naphthyl ketone | Positive | - | 97.9 | 0.1 | 6.8 | 0.4 | 52.3 | 4.5 | 0.9 | 2.6 | 0.5 | 3.5 | 93.4 | 4.1 | 48.8 |
| 38 | Fenofibrate | Positive | - | 98.7 | 0.0 | 37.0 | 4.5 | 67.8 | 0.0 | 0.0 | 0.0 | 0.0 | 0.0 | 98.7 | 37.0 | 67.8 |
| 39 | 4'-Methylbenzylidene camphor | Negative | Negative | 4.1 | 1.3 | 0.0 | 0.0 | 2.0 | 0.2 | 0.9 | 0.0 | 0.2 | 0.1 | 3.9 | 0.0 | 2.0 |
| 40 | Aspirin | Negative | Negative | 0.0 | 0.0 | 22.3 | 0.3 | 11.2 | 0.9 | 0.6 | 22.5 | 0.5 | 11.7 | -0.9 | -0.2 | -0.6 |
| 41 | Benzocaine | Negative | Negative | 4.5 | 1.0 | 0.0 | 0.2 | 2.2 | 0.3 | 0.9 | 0.2 | 0.6 | 0.2 | 4.2 | -0.2 | 2.0 |
| 42 | Erythromycin | Negative | Negative | 0.0 | 0.2 | 0.0 | 0.2 | 0.0 | 0.0 | 1.1 | 0.0 | 0.1 | 0.0 | 0.0 | 0.0 | 0.0 |
| 43 | Methyl salicylate | Negative | Negative | 28.0 | 0.1 | 5.9 | 0.5 | 17.0 | 0.0 | 1.1 | 0.1 | 0.7 | 0.0 | 28.0 | 5.8 | 16.9 |
| 44 | Penicillin G | Negative | Negative | 2.4 | 0.3 | 1.2 | 0.3 | 1.8 | 1.1 | 0.6 | 0.8 | 0.1 | 1.0 | 1.3 | 0.4 | 0.9 |

Table 4-5

| No. | Name of compound | In vivo phototoxicity | In vivo photoallergy | Under light irradiation | | | | | | Without light irradiation | | | | | | Difference in depletion (under light irradiation - without light irradiation) | | |
|---|---|---|---|---|---|---|---|---|---|---|---|---|---|---|---|---|---|---|
| | | | | NAC | | NAL | | Average score (%) | | NAC | | NAL | | Average score (%) | | NAC | NAL | Average score (%) |
| | | | | Depletion (%) | SD | Depletion (%) | SD | | | Depletion (%) | SD | Depletion (%) | SD | | | | | |
| 45 | Phenytoin | Negative | Negative | 3.1 | 0.1 | 0.0 | 0.6 | 1.6 | | 0.0 | 0.9 | 0.0 | 0.2 | 0.0 | | 3.1 | 0.0 | 1.6 |
| 46 | 1,3-Butylene glycol | Negative | Negative | 0.2 | 1.8 | 0.0 | 0.0 | 0.1 | | 0.0 | 0.0 | 0.1 | 0.1 | 0.1 | | 0.2 | -0.1 | 0.1 |
| 47 | 2-Propanol | Negative | Negative | 0.0 | 0.0 | 0.3 | 0.3 | 0.2 | | 0.5 | 1.0 | 0.0 | 0.0 | 0.3 | | -0.5 | 0.3 | -0.1 |
| 48 | Ascorbic acid | Negative | Negative | 71.8 | 1.6 | 0.0 | 0.0 | 35.9 | | 70.3 | 0.1 | 1.0 | 0.4 | 35.6 | | 1.5 | -1.0 | 0.3 |
| 49 | Cetyl alcohol | Negative | Negative | 3.8 | 0.3 | 6.9 | 0.7 | 5.3 | | 0.0 | 0.0 | 2.3 | 0.3 | 1.1 | | 3.8 | 4.6 | 4.2 |
| 50 | Ethanol | Negative | Negative | 0.0 | 0.0 | 0.0 | 0.0 | 0.0 | | 0.3 | 0.7 | 0.0 | 0.0 | 0.1 | | -0.3 | 0.0 | -0.1 |
| 51 | Glycerine | Negative | Negative | 0.0 | 0.0 | 0.0 | 0.0 | 0.0 | | 0.3 | 0.8 | 0.0 | 0.0 | 0.1 | | -0.3 | 0.0 | -0.1 |
| 52 | Isopropyl myristate | Negative | Negative | 0.9 | 2.5 | 0.0 | 0.0 | 0.5 | | 0.0 | 0.0 | 0.0 | 0.0 | 0.0 | | 0.9 | 0.0 | 0.5 |
| 53 | Lauric acid | Negative | Negative | 0.0 | 0.0 | 2.6 | 0.1 | 1.3 | | 0.0 | 0.0 | 1.4 | 0.5 | 0.7 | | 0.0 | 1.2 | 0.6 |
| 54 | Propylene glycol | Negative | Negative | 0.0 | 0.0 | 0.7 | 1.7 | 0.3 | | 0.0 | 0.0 | 0.0 | 0.0 | 0.0 | | 0.0 | 0.7 | 0.3 |
| 55 | Sodium laurate | Negative | Negative | 0.0 | 0.0 | 0.0 | 0.0 | 0.0 | | 0.0 | 0.0 | 0.0 | 0.0 | 0.0 | | 0.0 | 0.0 | 0.0 |

Table 4-6

| No. | Name of compound | In vivo phototoxicity | In vivo photoallergy | Under light irradiation | | | | | Without light irradiation | | | | | Difference in depletion (under light irradiation - without light irradiation) | | |
|---|---|---|---|---|---|---|---|---|---|---|---|---|---|---|---|---|
| | | | | NAC | | NAL | | Average score (%) | NAC | | NAL | | Average score (%) | NAC | NAL | Average score (%) |
| | | | | Depletion (%) | SD | Depletion (%) | SD | | Depletion (%) | SD | Depletion (%) | SD | | | | |
| 56 | Sodium lauryl sulfate | Negative | Negative | 0.0 | 0.0 | 2.4 | 0.4 | 1.2 | 0.0 | 0.0 | 2.6 | 1.5 | 1.3 | 0.0 | -0.2 | -0.1 |
| 57 | Sulisobenzone | Negative | Negative | 12.4 | 0.4 | 0.0 | 0.0 | 6.2 | 1.1 | 1.8 | 1.9 | 0.3 | 1.5 | 11.3 | -1.9 | 4.7 |
| 58 | DMSO | Negative | Negative | 0.2 | 1.2 | 0.0 | 0.0 | 0.1 | 0.0 | 0.3 | 0.0 | 0.0 | 0.0 | 0.1 | 0.0 | 0.1 |
| 59 | Lactic acid | Negative | Negative | 0.0 | 0.0 | 0.0 | 0.0 | 0.0 | 0.0 | 0.6 | 0.1 | 1.1 | 0.1 | 0.0 | -0.1 | -0.1 |

Of the 59 compounds used herein, 58 compounds gave the same results for phototoxicity or photoallergy determination in UV detection and fluorescence detection. As for one compound (sulfasalazine), it was impossible to determine the presence or absence of phototoxicity or photoallergy by UV detection because the co-elution of the test substance with NAC was observed in the HPLC measurement and the test substance was negative for NAL alone.

Of the 59 compounds, 38 compounds were phototoxic or photoallergic substances, of which 33 compounds were successfully determined to be phototoxic or photoallergic in the present invention. Of the 21 nonphototoxic, nonphotoallergic compounds, 20 compounds were also determined to be nonphototoxic and nonphotoallergic in the present invention. In UV detection, the co-elution of the peak derived from the test substance with the peak derived from NAC or NAL was observed in the HPLC measurement for 21 compounds; in fluorescence detection, no co-elution was observed for any substance.

Discussion:

From the above results, it was found that the prediction accuracy (agreement with an in vivo test) of the test method according to the present invention for the 59 compounds was about 90%, which is considerably high as the prediction accuracy of an alternative to animal experiments. The determination results were the same in UV detection and fluorescence detection except for one compound that was unable to be evaluated by UV detection. In UV detection, the co-elution of the peak derived from the test substance with the peak derived from NAC or NAL was observed in the HPLC measurement; in fluorescence detection, no co-elution was observed for any substance. Thus, it was found that fluorescence detection can be used to achieve more quantitative results. This is believed to support the idea that the present invention provides a test method by which the phototoxicity or photoallergy of a substance can be evaluated.

Example 2: Detection of Phototoxic and Photoallergic Substances in Multi-Component Liquid Mixtures

Multi-component liquid mixtures of commercially available chemical substances that were reported to be phototoxic or photoallergic were prepared and used for prediction of phototoxicity and photoallergy by the evaluation method according to the present invention.

Test substances:

Three types of liquid mixtures of six compounds in which, of the 59 compounds used in Example 1, the five nonphototoxic, nonphotoallergic compounds listed in the following table were mixed with one of the three phototoxic or photoallergic compounds listed in the same table were prepared and used for testing. As a comparative control, a liquid mixture of the five nonphototoxic, nonphotoallergic compounds was also prepared and used for testing. The liquid mixtures were prepared such that the concentrations of the compounds in each liquid mixture were all 1 mmol/L.

Table 5

| No. | Name of compound | CAS | In vivo phototoxicity | In vivo photoallergy | Solvent |
|---|---|---|---|---|---|
| Nonphototoxic, nonphotoallergic compounds | | | | | |
| 1 | Erythromycin | 114-07-8 | Negative | Negative | Acetonitrile |
| 2 | Phenytoin | 57-41-0 | Negative | Negative | Acetonitrile |
| 3 | Isopropyl myristate | 110-27-0 | Negative | Negative | Acetonitrile |
| 4 | Lauric acid | 143-07-7 | Negative | Negative | Acetonitrile |
| 5 | Propylene glycol | 57-55-6 | Negative | Negative | Acetonitrile |
| Phototoxic or photoallergic compounds | | | | | |
| 1 | 8-Methoxypsoralen | 298-81-7 | Positive | Positive | Acetonitrile |
| 2 | Ketoprofen | 22071-15-4 | Negative | Positive | Acetonitrile |
| 3 | Sulfanilamide | 63-74-1 | - | Positive | Acetonitrile |

For in vivo phototoxicity and in vivo photoallergy, see the following references:

1. Onoue S, Ohtake H, Suzuki G, Seto Y, Nishida H, Hirota M, Ashikaga T, Kouzuki H, 2016, Comparative study on prediction performance of photosafety testing tools on photoallergens, Toxicology In Vitro, 33:147-52
2. Onoue S, Suzuki G, Kato M, Hirota M, Nishida H, Kitagaki M, Kouzuki H, Yamada S, 2013, Non-animal photosafety assessment approaches for cosmetics based on the photochemical and photobiochemical properties, Toxicology In Vitro, 27(8):2316-24

Experimental conditions:

As the conditions without light irradiation, the liquid mixtures were each reacted with the nucleophilic reagents, namely, NAC and NAL, at 25°C for 24 hours. As the conditions with light irradiation, the liquid mixtures were each irradiated at room temperature with light at 2,000 $\mu$W/cm$^2$ for 1 hour and were then reacted at 25°C for 23 hours.

All reactions were performed on the 96-well plate. For each sample, n = 3. Reaction solutions to which only the solvent used for calculation of the depletions of NAC and NAL was added were also prepared. The reaction solutions were prepared such that the concentrations of NAC and NAL were 5 $\mu$mol/L and the concentration of the test substance was 0.5 mmol/L. After 24 hours, HPLC measurements were made by two detection methods, namely, light absorption detection on a photodiode array (PDA) detector and fluorescence detection on a fluorescence detector. For PDA detection, a trifluoroacetic acid (TFA) aqueous solution was added to the reaction solutions to a final TFA concentration of 0.5% (v/v) before use in the HPLC measurements. For fluorescence detection, each sample was diluted tenfold with a 0.5% (v/v) trifluoroacetic acid (TFA) aqueous solution before use in the HPLC measurements. Thereafter, the chromatographs and the depletions of NAC and NAL based on the measurement results for each liquid mixture were compared.

Measurement conditions:

The depletions of the nucleophilic reagents (NAC and NAL) were determined by UV detection at 281 nm or fluorescence detection at an excitation wavelength of 284 nm and a fluorescence wavelength of 333 nm under the HPLC measurement conditions given in "(5) HPLC Measurement" above.

Results:

The depletions of NAC and NAL and the average scores thereof after the reactions under light irradiation and without light irradiation and the differences between those obtained after light irradiation and those obtained without light irradiation for each liquid mixture are given in the following tables.

1. Results of UV Detection

EP 3 901 620 A1

Table 6

| UV | | | | | | | | | | | | | | | | | |
|---|---|---|---|---|---|---|---|---|---|---|---|---|---|---|---|---|---|
| No. | Phototoxic or pho-toallergic sub-stance in liquid mixture | In vivo phototoxi city | In vivo photoallergy | Under light irradiation | | | | | | Without light irradiation | | | | | | Difference in depletion (under light irradiation - without light irradiation) | | |
| | | | | NAC | | NAL | | Average score (%) | | NAC | | NAL | | Average score (%) | | NAC (%) | NAL (%) | Average score (%) |
| | | | | Depletion (%) | SD | Depletion (%) | SD | | | Depletion (%) | SD | Depletion (%) | SD | | | | | |
| 1 | 8-Methoxypsoralen | Positive | Positive | 85.6 | 0.3 | -91.0 | 3.4 | - | | 1.7 | 0.4 | -88.0 | 2.0 | - | | 86.5 | - | - |
| 2 | Ketoprofen | Negative | Positive | 100.0 | 0.0 | 29.3 | 1.8 | 64.6 | | 2.4 | 0.3 | 0.6 | 0.2 | 1.5 | | 97.6 | 28.6 | 63.1 |
| 3 | Sulfanilamide | - | Positive | 29.1 | 0.2 | 0.9 | 0.4 | 15.0 | | 1.6 | 0.9 | 0.6 | 0.4 | 1.1 | | 27.5 | 0.3 | 13.9 |
| 4 | None (nonphototoxic, nonphotoallergic substances alone) | Positive | Positive | 0.0 | 0.0 | 0.0 | 0.0 | 0.0 | | 1.2 | 0.9 | 0.1 | 0.4 | 0.7 | | -1.2 | -0.1 | -0.7 |

2. Results of Fluorescence Detection

Table 7

| Fluorescence | | | | | | | | | | | | | | | | |
|---|---|---|---|---|---|---|---|---|---|---|---|---|---|---|---|---|
| No. | Phototoxic or photoallergic substance in liquid mixture | In vivo phototoxicity | In vivo photoallergy | Under light irradiation | | | | | | Without light irradiation | | | | | | Difference in depletion (under light irradiation - without light irradiation) | | |
| | | | | NAC | | NAL | | Average score (%) | | NAC | | NAL | | Average score (%) | NAC (%) | NAL (%) | Average score (%) |
| | | | | Depletion (%) | SD | Depletion (%) | SD | | Depletion (%) | SD | Depletion (%) | SD | | | | | |
| 1 | 8-Methoxypsoralen | Positive | Positive | 97.6 | 0.2 | 46.6 | 3.1 | 72.1 | 1.8 | 0.7 | 22.7 | 0.4 | 12.2 | 86.5 | 24.0 | 59.9 |
| 2 | Ketoprofen | Negative | Positive | 93.5 | 0.2 | 28.4 | 2.1 | 60.9 | 0.9 | 1.4 | 0.3 | 1.1 | 0.6 | 92.6 | 28.1 | 60.3 |
| 3 | Sulfanilamide | - | Positive | 26.7 | 0.5 | 0.0 | 0.0 | 13.4 | 0.1 | 0.8 | 0.0 | 0.0 | 0.1 | 26.6 | 0.0 | 13.3 |
| 4 | None (nonphototoxic, nonphotoallergic substances alone) | Positive | Positive | 0.0 | 0.0 | 0.0 | 0.0 | 0.0 | 1.2 | 1.8 | 0.4 | 0.8 | 0.8 | -1.2 | -0.4 | -0.8 |

EP 3 901 620 A1

The liquid mixtures of the five nonphototoxic, nonphotoallergic compounds with the three phototoxic or photoallergic compounds used herein gave the same results for phototoxicity or photoallergy determination in UV detection and fluorescence detection. All three liquid mixtures were successfully determined to be phototoxic or photoallergic, as with the determination results for the single phototoxic or photoallergic compounds. The liquid mixture of the five nonphototoxic, nonphotoallergic compound alone was also determined to be nonphototoxic and nonphotoallergic, as with the results for each single compound. In UV detection, the co-elution of the peak derived from the test substance with the peak derived from NAC or NAL was observed in the HPLC measurement for one liquid mixture, as with the results for the single phototoxic or photoallergic compound; in fluorescence detection, no co-elution was observed for any substance.

Discussion:

From the above results, it was suggested that the test method according to the present invention is likely to be capable of detecting a phototoxic or photoallergic compound in a multi-component liquid mixture. Although the determination results were the same, in UV detection, the co-elution of the peak derived from the test substance with the peak derived from NAC or NAL was observed in the HPLC measurement; in fluorescence detection, no co-elution was observed for any substance. Thus, it was found that fluorescence detection can be used to achieve more quantitative results. This is believed to support the idea that the present invention provides a test method by which the phototoxicity or photoallergy of a substance can be evaluated irrespective of whether the substance is a single substance or a multi-component mixture.

Example 3: Detection of Photoallergic Compounds in Simulated Cosmetics

Multi-component liquid mixtures of simulated cosmetics prepared according to example formulations listed in a known database with commercially available chemical substances that were reported to be photoallergic were prepared and used for prediction of photoallergy by the evaluation method according to the present invention.

Test substances:

As the simulated cosmetics, a simulated toner, a simulated lotion, and a simulated cleansing oil containing the components listed in Table 8 below were prepared with reference to example formulations listed in Cosmetic-Info.jp, which is a cosmetic ingredient database. Nine types of multi-component liquid mixtures in which, of the 59 compounds used in Example 1, the simulated cosmetics were mixed with one of the three photoallergic compounds listed in Table 9 below were prepared and used for testing. As comparative controls, solutions of the simulated toner, the simulated lotion, and the simulated cleansing oil alone were used for testing. The liquid mixtures were prepared such that the total concentration of the components of the simulated cosmetics was 0.5 mg/mL and the concentrations of the three photoallergic compounds were 0.05 mg/mL, 0.2 mg/mL, or 0.5 mg/mL.

Table 8

| No. | Name of component (name of reagent) | Proportion (%) |
|---|---|---|
| Simulated toner | | |
| 1 | PYROTER GPI-25 | 19.6 |
| 2 | 1,3-Butanediol | 27.4 |
| 3 | Methylparaben | 2.0 |
| 4 | AJIDEW NL-50 | 49.0 |
| 5 | Sodium benzoate | 2.0 |
| Simulated lotion | | |
| 1 | Hexadecyl 2-ethylhexanoate | 3.7 |
| 2 | AMITER MA-HD | 4.9 |
| 3 | BESIL DM 1 PLUS | 9.8 |
| 4 | 1-Docosanol | 1.2 |
| 5 | Glycerol Monostearate | 4.9 |

(continued)

| Simulated lotion | | |
|---|---|---|
| 6 | Butyl p-hydroxybenzoate | 0.1 |
| 7 | Methylparaben | 0.2 |
| 8 | Aminosurfact | 0.4 |
| 9 | Betaine | 1.2 |
| 10 | 1,3-Butanediol | 24.5 |
| 11 | Glycerol | 12.2 |
| 12 | Xanthan Gum | 12.2 |
| 13 | Carbopol 941 polymer | 24.5 |
| 14 | L-Arginine | 0.2 |
| Simulated cleansing oil | | |
| 1 | Mineral oil (light white oil) | 30.2 |
| 2 | EMALEX INTD-139 | 25.3 |
| 3 | Isopropyl myristate | 30.3 |
| 4 | Glycerol tris(2-ethylhexanoate) | 2.0 |
| 5 | EMALEX PEIS-6EX | 1.0 |
| 6 | $(\pm)$-$\alpha$-Tocopherol acetate | 0.1 |
| 7 | EMALEX GWIS-320 | 10.1 |
| 8 | Glycerol | 1.0 |

Table 9

| No. | Name of component | CAS | In vivo phototoxicity[1,2] | In vivo photoallergy[1,2] | Solvent |
|---|---|---|---|---|---|
| 1 | Tetrachlorosalicylanilide | 1154-59-2 | Positive | Positive | Acetonitrile |
| 2 | Hydrochlorothiazide | 58-93-5 | - | Positive | Acetonitrile |
| 3 | Sulfanilamide | 63-74-1 | - | Positive | Acetonitrile |
| 1. Onoue S et al. (2016), Comparative study on prediction performance of photosafety testing tools on photoallergens, Toxicol In Vitro, 33:147-52<br>2. Onoue S et al. (2013), Non-animal photosafety assessment approaches for cosmetics based on the photochemical and photobiochemical properties, Toxicol In Vitro, 27(8):2316-24 | | | | | |

Experimental conditions:

As the conditions without light irradiation, the liquid mixtures were each reacted with the nucleophilic reagents, namely, NAC and NAL, at 25°C for 24 hours. As the conditions with light irradiation, the liquid mixtures were each irradiated at room temperature with light at 2,000 $\mu$W/cm$^2$ for 1 hour and were then reacted at 25°C for 23 hours.

All reactions were performed on the 96-well plate. For each sample, n = 3. Reaction solutions to which only the solvent used for calculation of the depletions (%) of NAC and NAL was added were also prepared. The reaction solutions were prepared such that the concentrations of NAC and NAL were 5 $\mu$mol/L and the concentration of the test substance was 0.0125 mg/mL, 0.05 mg/mL, or 0.125 mg/mL. After 24 hours, HPLC measurements were made by two detection methods, namely, light absorption detection on a photodiode array (PDA) detector and fluorescence detection on a fluorescence detector. For PDA detection, a trifluoroacetic acid (TFA) aqueous solution was added to the reaction solutions to a final TFA concentration of 0.5% (v/v) before use in the HPLC measurements. For fluorescence detection, each sample was diluted tenfold with a 0.5% (v/v) trifluoroacetic acid (TFA) aqueous solution before use in the HPLC measurements. Thereafter, the chromatographs and the depletions of NAC and NAL based on the measurement results for each liquid mixture were compared.

Measurement conditions:

The depletions (%) of the nucleophilic reagents (NAC and NAL) were determined by UV detection at 281 nm or fluorescence detection at an excitation wavelength of 284 nm and a fluorescence wavelength of 333 nm under the HPLC measurement conditions given in "(5) HPLC Measurement" above.

Results:

The depletions of NAC and NAL and the average scores thereof after the reactions under light irradiation and without light irradiation and the differences between those obtained after light irradiation and those obtained without light irradiation for each liquid mixture are given in the following tables.

1. Results of UV Detection

Table 10-1

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average score (%) | NAC | | NAL | | Average score (%) | NAC (%) | NAL (%) | Average score (%) |
| | | | Depletion (%) | SD | Depletion (%) | SD | | Depletion (%) | SD | Depletion (%) | SD | | | | |
| Photoallergic compound concentration: 0.5 mg/mL | | | | | | | | | | | | | | | |
| 1-1 | Simulated toner | Tetrachlorosalicylanilide | -146.1 | 4.6 | 70.9 | 0.9 | -37.6 | 51.0 | 1.5 | 0.0 | 0.0 | 25.5 | - | 70.9 | - |
| 1-2 | Simulated lotion | Tetrachlorosalicylanilide | -293.2 | 13.1 | 61.1 | 1.2 | -116.1 | 60.3 | 1.1 | 0.0 | 0.0 | 30.2 | - | 61.1 | - |
| 1-3 | Simulated cleansing oil | Tetrachlorosalicylanilide | -360.3 | 0.5 | 76.7 | 3.4 | -141.8 | 67.7 | 1.4 | 0.0 | 0.0 | 33.8 | - | 76.7 | - |
| 1-4 | - | Tetrachlorosalicylanilide | -338.2 | 14.5 | 81.3 | 1.3 | -128.5 | 93.7 | 1.9 | 2.6 | 0.7 | 48.2 | - | 78.7 | - |
| 2-1 | Simulated toner | Hydrochlorothiazide | 61.7 | 0.9 | 0.3 | 0.3 | 31.0 | 0.0 | 0.0 | 0.0 | 0.0 | 0.0 | 61.7 | 0.3 | 31.0 |
| 2-2 | Simulated lotion | Hydrochlorothiazide | 75.7 | 1.2 | 0.2 | 0.6 | 37.9 | 0.0 | 0.0 | 0.0 | 0.0 | 0.0 | 75.7 | 0.2 | 37.9 |
| 2-3 | Simulated cleansing oil | Hydrochlorothiazide | 85.8 | 0.2 | 0.0 | 0.0 | 42.9 | 0.0 | 0.0 | 0.0 | 0.0 | 0.0 | 85.8 | 0.0 | 42.9 |
| 2-4 | - | Hydrochlorothiazide | 84.5 | 0.8 | 4.4 | 0.5 | 44.5 | 0.0 | 0.0 | 0.0 | 0.0 | 0.0 | 84.5 | 4.4 | 44.5 |
| 3-1 | Simulated toner | Sulfanilamide | 73.0 | 2.5 | 0.0 | 0.0 | 36.5 | 0.0 | 0.0 | 0.0 | 0.0 | 0.0 | 73.0 | 0.0 | 36.5 |
| 3-2 | Simulated lotion | Sulfanilamide | 74.4 | 1.3 | 0.0 | 0.0 | 37.2 | 0.0 | 0.0 | 0.6 | 0.4 | 0.3 | 74.4 | -0.6 | 36.9 |
| 3-3 | Simulated cleansing oil | Sulfanilamide | 75.5 | 0.1 | 0.0 | 1.0 | 37.8 | 0.0 | 0.0 | 0.0 | 0.0 | 0.0 | 75.5 | 0.0 | 37.8 |
| 3-4 | - | Sulfanilamide | 79.4 | 0.9 | 0.0 | 0.0 | 39.7 | 0.0 | 0.0 | 0.0 | 0.0 | 0.0 | 79.4 | 0.0 | 39.7 |

▨ : The co-elution of the test substance with NAC or NAL was observed in the HPLC measurement.

Table 10-2

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average score (%) | NAC | | NAL | | Average score (%) | NAC (%) | NAL (%) | Average score (%) |
| | | | Depletion (%) | SD | Depletion (%) | SD | | Depletion (%) | SD | Depletion (%) | SD | | | | |
| Photoallergic compound concentration: 0.2 mg/mL | | | | | | | | | | | | | | | |
| 1-1 | Simulated toner | Tetrachlorosalicylanilide | -16.2 | 2.5 | 43.5 | 0.5 | 13.6 | 37.5 | 1.1 | 0.0 | 0.0 | 18.7 | - | 43.5 | - |
| 1-2 | Simulated lotion | Tetrachlorosalicylanilide | -82.5 | 5.4 | 45.7 | 0.4 | -18.4 | 39.8 | 0.8 | 0.0 | 0.0 | 19.9 | - | 45.7 | - |
| 1-3 | Simulated cleansing oil | Tetrachlorosalicylanilide | -129.2 | 1.4 | 44.3 | 1.4 | -42.5 | 48.8 | 0.5 | 0.0 | 0.0 | 24.4 | - | 44.3 | - |
| 1-4 | - | Tetrachlorosalicylanilide | -96.9 | 6.1 | 67.1 | 1.1 | -14.9 | 70.1 | 2.8 | 0.6 | 1.0 | 35.4 | - | 66.5 | - |
| 2-1 | Simulated toner | Hydrochlorothiazide | 30.9 | 0.3 | 0.0 | 0.0 | 15.5 | 0.0 | 0.0 | 0.0 | 0.0 | 0.0 | 30.9 | 0.0 | 15.5 |
| 2-2 | Simulated lotion | Hydrochlorothiazide | 46.1 | 2.1 | 0.0 | 0.0 | 23.1 | 0.0 | 0.0 | 0.0 | 0.0 | 0.0 | 46.1 | 0.0 | 23.1 |
| 2-3 | Simulated cleansing oil | Hydrochlorothiazide | 52.7 | 0.7 | 0.0 | 0.0 | 26.4 | 0.0 | 0.0 | 0.0 | 0.0 | 0.0 | 52.7 | 0.0 | 26.4 |
| 2-4 | - | Hydrochlorothiazide | 60.1 | 1.2 | 1.4 | 0.2 | 30.8 | 0.0 | 0.0 | 0.0 | 0.0 | 0.0 | 60.1 | 1.4 | 30.8 |
| 3-1 | Simulated toner | Sulfanilamide | 46.9 | 1.0 | 0.0 | 0.0 | 23.4 | 0.0 | 0.0 | 0.0 | 0.0 | 0.0 | 46.9 | 0.0 | 23.4 |
| 3-2 | Simulated lotion | Sulfanilamide | 53.7 | 0.7 | 0.0 | 0.0 | 26.8 | 0.0 | 0.0 | 0.4 | 0.2 | 0.2 | 53.7 | -0.4 | 26.7 |
| 3-3 | Simulated cleansing oil | Sulfanilamide | 55.1 | 0.7 | 0.0 | 0.0 | 27.6 | 0.0 | 0.0 | 0.0 | 0.0 | 0.0 | 55.1 | 0.0 | 27.6 |
| 3-4 | - | Sulfanilamide | 51.3 | 1.1 | 0.3 | 0.6 | 25.8 | 0.0 | 0.0 | 0.0 | 0.0 | 0.0 | 51.3 | 0.3 | 25.8 |

▨ : The co-elution of the test substance with NAC or NAL was observed in the HPLC measurement.

Table 10-3

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average score (%) | NAC | | NAL | | Average score (%) | NAC (%) | NAL (%) | Average score (%) |
| | | | Depletion (%) | SD | Depletion (%) | SD | | Depletion (%) | SD | Depletion (%) | SD | | | | |
| Photoallergic compound concentration: 0.05 mg/mL | | | | | | | | | | | | | | | |
| 1-1 | Simulated toner | Tetrachlorosalicylanilide | 74.4 | 1.0 | 17.9 | 0.8 | 46.2 | 15.5 | 0.3 | 0.0 | 0.0 | 7.7 | - | 17.9 | - |
| 1-2 | Simulated lotion | Tetrachlorosalicylanilide | 55.1 | 0.8 | 17.1 | 0.8 | 36.1 | 16.8 | 0.7 | 0.0 | 0.0 | 8.4 | - | 17.1 | - |
| 1-3 | Simulated cleansing oil | Tetrachlorosalicylanilide | 36.6 | 2.0 | 12.2 | 1.6 | 24.4 | 25.2 | 0.4 | 0.0 | 0.0 | 12.6 | - | 12.2 | - |
| 1-4 | - | Tetrachlorosalicylanilide | 58.0 | 1.9 | 30.1 | 0.8 | 44.0 | 34.2 | 2.1 | -0.2 | 0.8 | 17.0 | - | 30.3 | - |
| 2-1 | Simulated toner | Hydrochlorothiazide | 4.9 | 0.2 | 0.0 | 0.0 | 2.5 | 0.0 | 0.0 | 0.0 | 0.0 | 0.0 | 4.9 | 0.0 | 2.5 |
| 2-2 | Simulated lotion | Hydrochlorothiazide | 14.0 | 0.8 | 0.0 | 0.0 | 7.0 | 0.0 | 1.1 | 0.0 | 0.0 | 0.0 | 13.9 | 0.0 | 7.0 |
| 2-3 | Simulated cleansing oil | Hydrochlorothiazide | 10.7 | 1.5 | 0.0 | 0.0 | 5.3 | 0.0 | 0.0 | 0.0 | 0.0 | 0.0 | 10.7 | 0.0 | 5.3 |
| 2-4 | - | Hydrochlorothiazide | 20.9 | 1.1 | 0.3 | 0.4 | 10.6 | 0.0 | 0.0 | 0.0 | 0.0 | 0.0 | 20.9 | 0.3 | 10.6 |
| 3-1 | Simulated toner | Sulfanilamide | 13.5 | 0.4 | 0.0 | 0.0 | 6.7 | 0.0 | 0.0 | 0.0 | 0.0 | 0.0 | 13.5 | 0.0 | 6.7 |
| 3-2 | Simulated lotion | Sulfanilamide | 25.5 | 1.5 | 0.0 | 0.0 | 12.8 | 0.0 | 0.0 | 0.3 | 0.1 | 0.1 | 25.5 | -0.3 | 12.6 |
| 3-3 | Simulated cleansing oil | Sulfanilamide | 12.6 | 0.7 | 0.0 | 0.0 | 6.3 | 0.0 | 0.0 | 0.0 | 0.0 | 0.0 | 12.6 | 0.0 | 6.3 |
| 3-4 | - | Sulfanilamide | 20.4 | 0.5 | 0.0 | 0.0 | 10.2 | 0.0 | 0.0 | 0.0 | 0.0 | 0.0 | 20.4 | 0.0 | 10.2 |

: The co-elution of the test substance with NAC or NAL was observed in the HPLC measurement.

Table 10-4

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average score (%) | NAC | | NAL | | Average score (%) | NAC (%) | NAL (%) | Average score (%) |
| | | | Depletion (%) | SD | Depletion (%) | SD | | Depletion (%) | SD | Depletion (%) | SD | | | | |
| Simulated cosmetics alone (no photoallergic compound added) | | | | | | | | | | | | | | | |
| 4-1 | Simulated toner | - | 0.0 | 0.0 | 0.0 | 0.0 | 0.0 | 0.0 | 0.0 | 0.0 | 0.0 | 0.0 | 0.0 | 0.0 | 0.0 |
| 4-2 | Simulated lotion | - | 2.5 | 0.4 | 0.0 | 0.0 | 1.3 | 0.0 | 0.0 | 0.7 | 0.5 | 0.3 | 2.5 | -0.7 | 0.9 |
| 4-3 | Simulated cleansing oil | - | 0.0 | 0.0 | 0.0 | 0.0 | 0.0 | 0.0 | 0.0 | 0.0 | 0.0 | 0.0 | 0.0 | 0.0 | 0.0 |

2. Results of Fluorescence Detection

Table 11-1

| No. | Simulated cosmetics | Compound | Under light irradiation | | | | | | Without light irradiation | | | | | | Difference in depletion (under light irradiation - without light irradiation) | | |
| | | | NAC | | NAL | | Average score (%) | | NAC | | NAL | | Average score (%) | | NAC (%) | NAL (%) | Average score (%) |
| | | | Depletion (%) | SD | Depletion (%) | SD | | | Depletion (%) | SD | Depletion (%) | SD | | | | | |
| Photoallergic compound concentration: 0.5 mg/mL | | | | | | | | | | | | | | | | | |
| 1-1 | Simulated toner | Tetrachlorosalicylanilide | 100.0 | 0.0 | 72.0 | 0.6 | 86.0 | | 40.7 | 1.5 | 1.9 | 1.7 | 21.3 | | 59.3 | 70.1 | 64.7 |
| 1-2 | Simulated lotion | Tetrachlorosalicylanilide | 100.0 | 0.0 | 73.6 | 0.5 | 86.8 | | 49.7 | 1.3 | 0.4 | 1.5 | 25.1 | | 50.3 | 73.2 | 61.7 |
| 1-3 | Simulated cleansing oil | Tetrachlorosalicylanilide | 100.0 | 0.0 | 81.0 | 0.6 | 90.5 | | 58.6 | 1.5 | 0.0 | 0.0 | 29.3 | | 41.4 | 81.0 | 61.2 |
| 1-4 | - | Tetrachlorosalicylanilide | 97.2 | 0.0 | 88.9 | 0.5 | 93.0 | | 75.6 | 1.9 | 1.8 | 0.5 | 38.7 | | 21.5 | 87.1 | 54.3 |
| 2-1 | Simulated toner | Hydrochlorothiazide | 60.9 | 0.4 | 0.0 | 0.0 | 30.4 | | 0.0 | 0.0 | 0.0 | 0.0 | 0.0 | | 60.9 | 0.0 | 30.4 |
| 2-2 | Simulated lotion | Hydrochlorothiazide | 73.1 | 0.7 | 0.0 | 0.0 | 36.5 | | 0.0 | 0.0 | 0.5 | 0.7 | 0.3 | | 73.1 | -0.5 | 36.3 |
| 2-3 | Simulated cleansing oil | Hydrochlorothiazide | 84.2 | 0.5 | 0.0 | 0.0 | 42.1 | | 0.0 | 0.0 | 0.0 | 0.0 | 0.0 | | 84.2 | 0.0 | 42.1 |
| 2-4 | | Hydrochlorothiazide | 85.9 | 0.8 | 5.6 | 1.3 | 45.8 | | 0.0 | 0.0 | 0.0 | 0.0 | 0.0 | | 85.9 | 5.6 | 45.8 |
| 3-1 | Simulated toner | Sulfanilamide | 70.9 | 1.6 | 0.0 | 0.0 | 35.5 | | 0.0 | 0.0 | 0.0 | 0.0 | 0.0 | | 70.9 | 0.0 | 35.5 |
| 3-2 | Simulated lotion | Sulfanilamide | 70.3 | 1.1 | 0.0 | 0.0 | 35.2 | | 0.0 | 0.0 | 0.5 | 0.4 | 0.3 | | 70.3 | -0.5 | 34.9 |
| 3-3 | Simulated cleansing oil | Sulfanilamide | 70.8 | 1.0 | 0.0 | 0.0 | 35.4 | | 0.0 | 0.0 | 0.0 | 0.0 | 0.0 | | 70.8 | 0.0 | 35.4 |
| 3-4 | | Sulfanilamide | 78.2 | 1.0 | 3.1 | 1.8 | 40.6 | | 0.0 | 0.0 | 0.0 | 0.0 | 0.0 | | 78.2 | 3.1 | 40.6 |

Table 11-2

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average | NAC | | NAL | | Average | NAC | NAL | Average |
| | | | Depletion (%) | SD | Depletion (%) | SD | score (%) | Depletion (%) | SD | Depletion (%) | SD | score (%) | (%) | (%) | score (%) |
| Photoallergic compound concentration: 0.2 mg/mL | | | | | | | | | | | | | | | |
| 1-1 | Simulated toner | Tetrachlorosalicy lanilide | 100.0 | 0.0 | 52.4 | 0.7 | 76.2 | 27.4 | 2.0 | 1.4 | 0.5 | 14.4 | 72.6 | 51.0 | 61.8 |
| 1-2 | Simulated lotion | Tetrachlorosalicy lanilide | 100.0 | 0.0 | 54.7 | 1.4 | 77.3 | 30.9 | 0.4 | 0.0 | 0.0 | 15.4 | 69.1 | 54.7 | 61.9 |
| 1-3 | Simulated cleansing oil | Tetrachlorosalicy lanilide | 100.0 | 0.0 | 57.4 | 1.7 | 78.7 | 38.7 | 2.2 | 0.0 | 0.0 | 19.3 | 61.3 | 57.4 | 59.4 |
| 1-4 | - | Tetrachlorosalicy lanilide | 97.5 | 0.0 | 72.9 | 0.6 | 85.2 | 52.2 | 3.2 | 0.2 | 0.9 | 26.2 | 45.3 | 72.6 | 58.9 |
| 2-1 | Simulated toner | Hydrochlorothiazide | 29.3 | 0.9 | 0.0 | 0.0 | 14.7 | 0.0 | 0.0 | 0.0 | 0.0 | 0.0 | 29.3 | 0.0 | 14.7 |
| 2-2 | Simulated lotion | Hydrochlorothiazide | 41.7 | 1.0 | 0.0 | 0.0 | 20.8 | 0.0 | 0.0 | 0.2 | 0.5 | 0.1 | 41.7 | -0.2 | 20.7 |
| 2-3 | Simulated cleansing oil | Hydrochlorothiazide | 48.3 | 2.0 | 0.0 | 0.0 | 24.1 | 0.0 | 0.0 | 0.0 | 0.0 | 0.0 | 48.3 | 0.0 | 24.1 |
| 2-4 | | Hydrochlorothiazide | 60.2 | 1.4 | 4.0 | 1.6 | 32.1 | 0.0 | 0.0 | 0.0 | 0.0 | 0.0 | 60.2 | 4.0 | 32.1 |
| 3-1 | Simulated toner | Sulfanilamide | 45.3 | 1.4 | 0.0 | 0.0 | 22.6 | 0.0 | 0.0 | 0.0 | 0.0 | 0.0 | 45.3 | 0.0 | 22.6 |
| 3-2 | Simulated lotion | Sulfanilamide | 49.2 | 0.4 | 0.0 | 0.0 | 24.6 | 0.0 | 0.0 | 0.7 | 1.1 | 0.4 | 49.2 | -0.7 | 24.2 |
| 3-3 | Simulated cleansing oil | Sulfanilamide | 49.5 | 0.7 | 0.0 | 0.0 | 24.7 | 0.0 | 0.0 | 0.0 | 0.0 | 0.0 | 49.5 | 0.0 | 24.7 |
| 3-4 | - | Sulfanilamide | 49.9 | 0.9 | 1.8 | 1.5 | 25.8 | 0.0 | 0.0 | 0.0 | 0.0 | 0.0 | 49.9 | 1.8 | 25.8 |

Table 11-3

EP 3 901 620 A1

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average score (%) | NAC | | NAL | | Average score (%) | NAC (%) | NAL (%) | Average score (%) |
| | | | Depletion (%) | SD | Depletion (%) | SD | | Depletion (%) | SD | Depletion (%) | SD | | | | |
| Photoallergic compound concentration: 0.05 mg/mL | | | | | | | | | | | | | | | |
| 1-1 | Simulated toner | Tetrachlorosalicy lanilide | 100.0 | 0.0 | 21.6 | 0.6 | 60.8 | 11.5 | 3.4 | 2.0 | 0.9 | 6.8 | 88.5 | 19.6 | 54.0 |
| 1-2 | Simulated lotion | Tetrachlorosalicy lanilide | 100.0 | 0.0 | 20.0 | 1.4 | 60.0 | 12.0 | 0.7 | 0.0 | 0.0 | 6.0 | 88.0 | 20.0 | 54.0 |
| 1-3 | Simulated cleansing oil | Tetrachlorosalicy lanilide | 100.0 | 0.0 | 17.6 | 1.3 | 58.8 | 18.2 | 3.3 | 0.0 | 0.0 | 9.1 | 81.8 | 17.6 | 49.7 |
| 1-4 | - | Tetrachlorosalicy lanilide | 98.2 | 0.1 | 32.5 | 1.4 | 65.4 | 21.7 | 2.1 | 0.0 | 0.0 | 10.9 | 76.5 | 32.5 | 54.5 |
| 2-1 | Simulated toner | Hydrochlorothiazide | 6.4 | 0.5 | 0.0 | 0.0 | 3.2 | 0.0 | 0.0 | 0.0 | 0.0 | 0.0 | 6.4 | 0.0 | 3.2 |
| 2-2 | Simulated lotion | Hydrochlorothiazide | 14.2 | 0.5 | 0.0 | 0.0 | 7.1 | 0.0 | 0.0 | 2.4 | 0.8 | 1.2 | 14.2 | -2.4 | 5.9 |
| 2-3 | Simulated cleansing oil | Hydrochlorothiazide | 10.5 | 0.9 | 0.0 | 0.0 | 5.2 | 0.0 | 0.0 | 0.0 | 0.0 | 0.0 | 10.5 | 0.0 | 5.2 |
| 2-4 | - | Hydrochlorothiazide | 21.9 | 1.3 | 2.6 | 1.3 | 12.3 | 0.0 | 0.0 | 0.0 | 0.0 | 0.0 | 21.9 | 2.6 | 12.3 |
| 3-1 | Simulated toner | Sulfanilamide | 11.5 | 0.6 | 0.0 | 0.0 | 5.8 | 0.0 | 0.0 | 0.0 | 0.0 | 0.0 | 11.5 | 0.0 | 5.8 |
| 3-2 | Simulated lotion | Sulfanilamide | 19.1 | 0.6 | 0.0 | 0.0 | 9.6 | 0.0 | 0.0 | 0.6 | 0.1 | 0.3 | 19.1 | -0.6 | 9.3 |
| 3-3 | Simulated cleansing oil | Sulfanilamide | 10.6 | 0.8 | 0.0 | 0.0 | 5.3 | 0.0 | 0.0 | 0.0 | 0.0 | 0.0 | 10.6 | 0.0 | 5.3 |
| 3-4 | - | Sulfanilamide | 21.2 | 0.6 | 2.4 | 2.2 | 11.8 | 0.0 | 0.0 | 0.0 | 0.0 | 0.0 | 21.2 | 2.4 | 11.8 |

Table 11-4

| No. | Simulated cosmetics | Compound | Under light irradiation | | | | | Without light irradiation | | | | | Difference in depletion (under light irradiation - without light irradiation) | | |
|---|---|---|---|---|---|---|---|---|---|---|---|---|---|---|---|
| | | | NAC | | NAL | | Average score (%) | NAC | | NAL | | Average score (%) | NAC (%) | NAL (%) | Average score (%) |
| | | | Depletion (%) | SD | Depletion (%) | SD | | Depletion (%) | SD | Depletion (%) | SD | | | | |
| Simulated cosmetics alone (no photoallergic compound added) | | | | | | | | | | | | | | | |
| 4-1 | Simulated toner | - | 0.0 | 0.0 | 0.0 | 0.0 | 0.0 | 0.0 | 0.0 | 0.0 | 0.0 | 0.0 | 0.0 | 0.0 | 0.0 |
| 4-2 | Simulated lotion | - | 2.2 | 0.6 | 0.0 | 0.0 | 1.1 | 0.0 | 0.0 | 0.0 | 0.0 | 0.0 | 2.2 | 0.0 | 1.1 |
| 4-3 | Simulated cleansing oil | _ | 0.0 | 0.0 | 0.0 | 0.0 | 0.0 | 0.0 | 0.0 | 0.0 | 0.0 | 0.0 | 0.0 | 0.0 | 0.0 |

The liquid mixtures of the simulated cosmetics with the three photoallergic compounds used herein gave the same results for photoallergy determination in UV detection and fluorescence detection, except where tetrachlorosalicylanilide was added such that the photoallergic compound concentration was 0.05 mg/mL. When the photoallergic compound concentration was 0.2 mg/mL or more, all three liquid mixtures were successfully determined to be phototoxic or photoallergic, as with the determination results for the single phototoxic or photoallergic compounds.

In contrast, when the compound concentration was 0.05 mg/mL, the simulated cosmetics and the simulated cleansing oils to which hydrochlorothiazide or sulfanilamide was added and the simulated lotion to which hydrochlorothiazide was added were determined to be nonphotoallergic in both UV detection and fluorescence detection. In addition, when tetrachlorosalicylanilide was added at the same compound concentration, it was impossible to determine the presence or absence of photoallergy by UV detection because the co-elution of the test substance with NAC was observed in the HPLC measurement and the test substance was negative for NAL alone.

In UV detection, the co-elution of the peak derived from the test substance with the peak derived from NAC or NAL was observed in the HPLC measurement when tetrachlorosalicylanilide was added, as with the results for the single photoallergic compound; in fluorescence detection, no co-elution was observed for any substance.

Discussion:

From the above results, it was suggested that the test method according to the present invention is likely to be capable of detecting a photoallergic compound in an amount of 0.2 mg/mL or more in a multi-component liquid mixture. When the photoallergic compound concentration was 0.05 mg/mL, the depletion was near the determination criteria even in the case of single compounds; therefore, this concentration may be near the detection limit of the test method according to the present invention irrespective of whether the substance is a multi-component mixture.

In UV detection, it was impossible to determine the presence or absence of photoallergy for one compound because the co-elution of the peak derived from the test substance with the peak derived from NAC or NAL was observed in the HPLC measurement; in fluorescence detection, no co-elution was observed for any substance. Thus, it was found that fluorescence detection can be used to achieve more quantitative results.

The foregoing results are believed to support the idea that the present invention provides a test method by which the photoallergy of a substance can be evaluated irrespective of whether the substance is a single substance or a multi-component mixture.

**Claims**

1. A method for measuring phototoxicity or photoallergy, comprising:

   reacting a test substance with an organic compound that is an N-(arylalkylcarbonyl)cysteine or an $\alpha$-N-(arylalkylcarbonyl)lysine under irradiation with ultraviolet light;
   reacting the test substance with the organic compound that is the N-(arylalkylcarbonyl)cysteine or the $\alpha$-N-(arylalkylcarbonyl)lysine without irradiation with ultraviolet light;
   determining a depletion of the organic compound after each reaction by an optical measurement; and
   detecting phototoxicity or photoallergy from a difference between the depletion of the organic compound after the reaction under irradiation with ultraviolet light and the depletion of the organic compound after the reaction without irradiation with ultraviolet light.

2. The method for measuring phototoxicity or photoallergy according to claim 1, wherein the organic compound is N-(2-phenylacetyl)cysteine or N-[2-(naphthalen-1-yl)acetyl]cysteine.

3. The method for measuring phototoxicity or photoallergy according to claim 1, wherein the organic compound is $\alpha$-N-(2-phenylacetyl)lysine or $\alpha$-N-[2-(naphthalen-1-yl)acetyl]lysine.

4. The method for measuring phototoxicity or photoallergy according to any one of claims 1 to 3, wherein the ultraviolet light used for the reaction under irradiation with ultraviolet light is ultraviolet light with a wavelength of 400 nm or less.

5. The method for measuring phototoxicity or photoallergy according to any one of claims 1 to 4, wherein the depletion of the organic compound after each reaction is determined by an optical measurement using a fluorescence detector.

6. The method for measuring phototoxicity or photoallergy according to claim 5, wherein the optical measurement using a fluorescence detector is performed at an excitation wavelength of 200 to 350 nm and a fluorescence wavelength of 200 to 400 nm.

7. The method for measuring phototoxicity or photoallergy according to any one of claims 1 to 4, wherein the depletion of the organic compound after each reaction is determined by an optical measurement using an ultraviolet detector.

8. The method for measuring phototoxicity or photoallergy according to claim 7, wherein the optical measurement using an ultraviolet detector is performed at a detection wavelength of 200 to 400 nm.

9. The method for measuring phototoxicity or photoallergy according to any one of claims 1 to 8, wherein a concentration of the organic compound in a reaction solution for the reaction of the test substance with the organic compound is 0.05 $\mu$mol/L to 400 $\mu$mol/L.

10. The method for measuring phototoxicity or photoallergy according to any one of claims 1 to 9, wherein, when the test substance is reacted with the organic compound, a mixture containing two or more test substances is reacted with the organic compound.

11. The method for measuring phototoxicity or photoallergy according to any one of claims 1 to 10, further comprising subjecting to chromatography a reaction product obtained by reacting the test substance with the organic compound.

12. The method for measuring phototoxicity or photoallergy according to any one of claims 1 to 11, wherein, in the detecting phototoxicity or photoallergy from the difference between the depletion of the organic compound after the reaction under irradiation with ultraviolet light and the depletion of the organic compound after the reaction without irradiation with ultraviolet light, the test substance is determined to be positive in a case where one or more of the following criteria are satisfied:

(1) a difference obtained by subtracting a depletion of the N-(arylalkylcarbonyl)cysteine after the reaction without irradiation with ultraviolet light from a depletion of the N-(arylalkylcarbonyl)cysteine after the reaction under irradiation with ultraviolet light is 15% or more;
(2) a difference obtained by subtracting a depletion of the $\alpha$-N-(arylalkylcarbonyl)lysine after the reaction without irradiation with ultraviolet light from a depletion of the $\alpha$-N-(arylalkylcarbonyl)lysine after the reaction under irradiation with ultraviolet light is 15% or more; and
(3) an average of the difference in depletion in (1) and the difference in depletion in (2) is 10% or more.

13. A reagent for use in the method for measuring phototoxicity or photoallergy according to any one of claims 1 to 12, the reagent comprising an N-(arylalkylcarbonyl)cysteine or an $\alpha$-N-(arylalkylcarbonyl)lysine.

## INTERNATIONAL SEARCH REPORT

| International application No. |
| --- |
| PCT/JP2019/045035 |

A. CLASSIFICATION OF SUBJECT MATTER
G01N 21/78(2006.01)i
FI: G01N21/78 C

According to International Patent Classification (IPC) or to both national classification and IPC

B. FIELDS SEARCHED

Minimum documentation searched (classification system followed by classification symbols)
G01N21/00-21/83; G01N33/00-33/98

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JMEDPlus/JST7580 (JDream111)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-59102 A (FUJIFILM CORPORATION) 24.03.2011 (2011-03-24) claims 1, 4, 7-11 paragraphs [0002], [0010], [0019], [0013], [0037] | 13<br>1-13 |
| X<br>Y | JP 2014-37995 A (FUJIFILM CORPORATION) 27.02.2014 (2014-02-27) claims 8-11 paragraphs [0002], [0033], [0037], [0049] | 13<br>1-13 |
| Y | ONOUE, S. et al., "Analytical studies on the prediction of photosensitive/ phototoxic potential of pharmaceutical substances", Pharmaceutical Research, 30 November 2006, 23, 156-164, see abstract, page 159, lower right column to page 160, paragraph [0001], fig. 4 | 1-13 |

☒ Further documents are listed in the continuation of Box C.  ☒ See patent family annex.

| | |
| --- | --- |
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 January 2020 (17.01.2020) | Date of mailing of the international search report<br>04 February 2020 (04.02.2020) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/045035 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | DE AVILA, RI. et al., "In vitro assessment of skin sensitization, photosensitization and phototoxicity potential of commercial glyphosate-containing formulations", Toxicology In Vitro, 04 April 2017, vol. 45, 386-392, see abstract, page 387, column 2.4.2 | 1-13 |
| A | JP 2009-222466 A (SUMITOMO CHEMICAL CO., LTD.) 01.10.2009 (2009-10-01) claims 1, 3, 4, 6, 10 paragraphs [0002], [0006], [0019], [0020], [0045]-[0047] | 5-6 |
| A | WO 2013/020600 A1 (CROSS SA) 14.02.2013 (2013-02-14) | 1-13 |
| A | JP 2005-508840 A (BIOADVANTEX PHARMA INC.) 07.04.2005 (2005-04-07) | 1-13 |

Form PCT/ISA/210 (continuation of second sheet) (January 2015)

INTERNATIONAL SEARCH REPORT

Information on patent family members

International application No.

PCT/JP2019/045035

| Patent Documents referred in the Report | Publication Date | Patent Family | Publication Date |
|---|---|---|---|
| JP 2011-59102 A | 24 Mar. 2011 | JP 5997543 B2 | |
| JP 2014-37995 A | 27 Feb. 2014 | JP 5466105 B2 | |
| JP 2009-222466 A | 01 Oct. 2009 | JP 5223391 B2 | |
| WO 2013/020600 A1 | 14 Feb. 2013 | EP 2741742 A1<br>KR 10-2014-0147799 A | |
| JP 2005-508840 A | 07 Apr. 2005 | US 2002/0142991 A1<br>WO 02/078627 A2<br>CA 2442168 A1<br>US 2003/0069311 A1<br>EP 1379232 A<br>CN 1507350 A<br>JP 2005-508840 A<br>JP 2011-225610 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011059102 A

- JP 2014037995 A

### Non-patent literature cited in the description

- **ONOUE S ; TSUDA Y.** Analytical studies on the prediction of photosensitive/phototoxic potential of pharmaceutical substances. *Pharmaceutical Research,* 2006, vol. 23 (1), 156-164
- **ONOUE S ; IGARASHI N ; YAMADA S ; TSUDA Y.** High-throughput reactive oxygen species (ROS) assay: an enabling technology for screening the phototoxic potential of pharmaceutical substances. *Journal of Pharmaceutical and Biomedical Analysis,* 2008, vol. 46 (1), 187-193
- **DE AVILA RI ; TEIXEIRA GC ; VELOSO DFMC ; MOREIRA LC ; LIMA EM ; VALADARES MC.** In vitro assessment of skin sensitization, photosensitization and phototoxicity potential of commercial glyphosate-containing formulations. *Toxicology In Vitro,* 2017, vol. 45 (3), 386-392
- **ONOUE S ; OHTAKE H ; SUZUKI G ; SETO Y ; NISHIDA H ; HIROTA M ; ASHIKAGA T ; KOUZUKI H.** Comparative study on prediction performance of photosafety testing tools on photoallergens. *Toxicology In Vitro,* 2016, vol. 33, 147-52

- **ONOUE S ; SUZUKI G ; KATO M ; HIROTA M ; NISHIDA H ; KITAGAKI M ; KOUZUKI H ; YAMADA S.** Non-animal photosafety assessment approaches for cosmetics based on the photochemical and photobiochemical properties. *Toxicology In Vitro,* 2013, vol. 27 (8), 2316-24
- **SETO Y ; KATO M ; YAMADA S ; ONOUE S.** Development of micellar reactive oxygen species assay for photosafety evaluation of poorly water-soluble chemicals. *Toxicology In Vitro,* 2013, vol. 27 (6), 1838-46
- **ONOUE S et al.** Comparative study on prediction performance of photosafety testing tools on photoallergens. *Toxicol In Vitro,* 2016, vol. 33, 147-52
- **ONOUE S et al.** Non-animal photosafety assessment approaches for cosmetics based on the photochemical and photobiochemical properties. *Toxicol In Vitro,* 2013, vol. 27 (8), 2316-24